# EUROPEAN PATENT APPLICATION

(11) **EP 4 580 192 A1**
(43) Date of publication of application: **02.07.2025**
(21) Application number: 23856645.9
(22) Date of filing: 23.08.2023
(51) Int. Cl.: H04N 21/2187, H04N 21/431

(54) **VOICE CHAT DISPLAY METHOD AND APPARATUS, ELECTRONIC DEVICE AND COMPUTER-READABLE MEDIUM**

(30) Priority: 23.08.2022 CN 202211014032
(71) Applicant: DOUYIN VISION CO., LTD., Beijing 100041 (CN)
(72) Inventor: DONG, Shiwei, Beijing 100028 (CN); LIU, Yan, Beijing 100028 (CN)
(74) Representative: Dentons UK and Middle East LLP
(86) International application number: PCT/CN2023/114390
(87) International publication number: WO 2024/041556

(57) **Abstract**

The present application discloses a voice chat display method and apparatus, an electronic device and a computer-readable medium. The method comprises: when a first voice chat page is displayed on a broadcaster terminal used by a broadcaster and the first voice chat page comprises multiple candidate user interfaces, displaying a gift panel after the broadcaster terminal receives a trigger operation by the broadcaster with respect to a first target interface in the candidate user interfaces; and then, after the broadcaster terminal receives a trigger operation with respect to a first adjustment control in the gift panel, adjusting, on the first voice chat page, the interface display state of at least one user interface to be adjusted in the multiple candidate user interfaces, wherein the at least one user interface to be adjusted comprises the first target interface.

## Description

This application claims priority to Chinese Patent Application No. 202211014032.8, titled "METHOD AND APPARATUS FOR DISPLAYING CO-HOSTING, ELECTRONIC DEVICE AND COMPUTER READABLE MEDIUM", filed on August 23, 2022 with the China National Intellectual Property Administration, which is incorporated herein by reference in its entirety.

### FIELD

The present disclosure relates to the field of Internet technology, and in particular to a method and an apparatus for displaying co-hosting, an electronic device and a computer readable medium.

### BACKGROUND

Live streaming is an information release approach for producing and releasing information synchronously with the occurrence and development of events on the spot, with a two-direction communication process.

In some scenarios, the host/anchor of the live streaming room will invite some viewers (or other hosts) to participate in real time co-hosting, so that other viewers in the live streaming room can receive not only the audio data (and/or video data) from the host, but also the audio data (and/or video data) from the guests participating in the co-hosting. The guest participating in the co-hosting refer to the viewer (or other host) who is conducting the co-hosting with the host successfully.

Since there are defects in solutions of live streaming co-hosting, the display effect of the co-hosting in these solutions of the live streaming co-hosting is far from satisfaction.

### SUMMARY

The present disclosure provides a method and an apparatus for displaying co-hosting, an electronic device, and a computer readable medium.

To this end, the technical solutions provided in the embodiments of the present disclosure are as follows.

An embodiment of the present disclosure provides a method for displaying co-hosting, wherein the method is applied to a host terminal, and the method includes:
displaying a first co-hosting page; the first co-hosting page including multiple candidate user interfaces;
in response to a trigger operation for a first target interface among the multiple candidate user interfaces, displaying a gift panel; the gift panel including at least one virtual gift and a first adjustment control; and
in response to a trigger operation for the first adjustment control in the gift panel, adjusting an interface display state of at least one to-be-adjusted user interface among the multiple candidate user interfaces on the first co-hosting page; the at least one to-be-adjusted user interface including the first target interface.

According to a possible embodiment, the at least one to-be-adjusted user interface further includes a second target interface;
the adjusting an interface display state of at least one to-be-adjusted user interface among the multiple candidate user interfaces on the first co-hosting page, includes:
if the first target interface is in a deemphasized state, and the second target interface is in a highlighted state, adjusting the interface display state of the first target interface from the deemphasized state to the highlighted state, and adjusting the second target interface from the highlighted state to the deemphasized state.

According to a possible embodiment, if there are multiple candidate user interfaces in the highlighted state among the multiple candidate user interfaces, the second target interface is selected from the multiple candidate user interfaces in the highlighted state according to predetermined selection condition.

According to a possible embodiment, the in response to a trigger operation for the first adjustment control in the gift panel, adjusting, on the first co-hosting page, an interface display state of at least one to-be-adjusted user interface among the plurality of candidate user interfaces includes:
displaying a first prompt object in response to the trigger operation for the first adjustment control in the gift panel;
in response to a first operation triggered for the first prompt object, adjusting the interface display state of the first target interface from the deemphasized state to the highlighted state and adjusting the second target interface from the highlighted state to the deemphasized state.

According to a possible embodiment, the adjusting an interface display state of at least one to-be-adjusted user interface among the multiple candidate user interfaces on the first co-hosting page, includes:
if each of the candidate user interfaces is in a standard interface state, adjusting the interface display states of the multiple candidate user interfaces on the first co-hosting page according to a layout template to be used, so that the interface display state of the first target interface is different from the interface display states of other interfaces except the first target interface among the multiple candidate user interfaces.

According to a possible embodiment, the layout template to be used is determined according to page layout description information of the first co-hosting page.

According to a possible embodiment, after adjusting the interface display states of the multiple candidate user interfaces according to the layout template to be used, the method further includes:
displaying a first page in response to a trigger operation for a first management control in the first co-hosting page;
displaying a second page in response to a trigger operation for a second management control in the first page; where at least one candidate template is displayed on the second page;
in response to a trigger operation for a target template in the at least one candidate template, adjusting the interface display states of the multiple candidate user interfaces on the first co-hosting according to the target template.

According to a possible embodiment, the displaying the gift panel includes:
displaying the gift panel on the first co-hosting page;
in response to the trigger operation for the first adjustment control in the gift panel, adjusting the interface display state of at least one to-be-adjusted user interface among the multiple candidate user interfaces on the first co-hosting page, includes:
in response to the trigger operation for the first adjustment control in the gift panel, adjusting the interface display state of at least one to-be-adjusted user interface among the multiple candidate user interfaces on the first co-hosting page, and cancelling the display of the gift panel on the first co-hosting page.

According to a possible embodiment, the in response to the trigger operation for the first adjustment control in the gift panel, adjusting the interface display state of at least one to-be-adjusted user interface among the multiple candidate user interfaces on the first co-hosting page, includes:
if the first adjustment control is in a first control display state, adjusting the interface display state of at least one to-be-adjusted user interface among the multiple candidate user interfaces on the first co-hosting page in response to the trigger operation for the first adjustment control in the gift panel;
the method further includes:
   if the first adjustment control is in a second control display state, displaying a second prompt object in response to the trigger operation for the first adjustment control in the gift panel; where the second prompt object is used to indicate that the adjustment process for the interface display state of the first target interface is rejected.

According to a possible embodiment, the second control display state is determined according to a second operation triggered on a guest terminal corresponding to the first target interface; the second operation is used to adjust the first adjustment control from the first control display state to the second control display state.

According to a possible embodiment, when a co-hosting management page is displayed on the guest terminal corresponding to the first target interface, and the co-hosting management page includes a third adjustment control, the second operation includes a third operation triggered for the third adjustment control.

According to a possible embodiment, after adjusting the interface display state of at least one to-be-adjusted user interface among the multiple candidate user interfaces on the first co-hosting page, the method further includes:
if the adjusted first target interface is in the highlighted state, then once a pre-cancellation condition is met, adjusting the first target interface from the highlighted state to the standard interface state on the first co-hosting page.

According to a possible embodiment, the pre-cancellation condition is to trigger a fourth operation on the guest terminal corresponding to the first target interface; the fourth operation is used for requesting to cancel highlighting display of the first target interface.

According to a possible embodiment, in a case that the co-hosting management page is displayed on the guest terminal corresponding to the first target interface and the co-hosting management page includes a third adjustment control, the fourth operation includes a trigger operation for the third adjustment control.

According to a possible embodiment, the in response to a trigger operation for the first adjustment control in the gift panel, adjusting an interface display state of at least one to-be-adjusted user interface among the multiple candidate user interfaces on the first co-hosting page, includes:
in response to the trigger operation for the first adjustment control in the gift panel, adjusting the interface display state of at least one to-be-adjusted user interface among the multiple candidate user interfaces on the first co-hosting page, and sending a third prompt object to the guest terminal corresponding to the first target interface; where the third prompt object is used for describing a change of the interface display state of the first target interface.

According to a possible embodiment, a second adjustment control is displayed on the first target interface, and
after the displaying the first co-hosting page, the method further includes:
in response to a trigger operation for the second adjustment control in the first target interface, adjusting an interface display state of at least one to-be-adjusted user interface among the multiple candidate user interfaces on the first co-hosting page.

A method for displaying co-hosting is provided according to the embodiments of the present disclosure, where the method is applied to a guest terminal, and the method includes:
displaying a second co-hosting page; the second co-hosting page including multiple candidate user interfaces; the multiple candidate user interfaces including a first target interface corresponding to the guest terminal;
if the first target interface is in a highlighted state, i switching the first target interface from the highlighted state to a non-highlighted state n response to a fourth operation triggered for the second co-hosting page.

According to a possible embodiment, the switching the first target interface from the highlighted state to a non-highlighted state in response to the fourth operation triggered for the second co-hosting page, includes:
displaying a co-hosting management page in response to a trigger operation for an to-be-used object in the second co-hosting page; where the co-hosting management includes a third adjustment control;
in response to a trigger operation for the third adjustment control in the co-hosting management page, switching the first target interface from the highlighted state to the non-highlighted state.

According to a possible embodiment, the switching the first target interface from the highlighted state to the non-highlighted state in response to the trigger operation for the third adjustment control in the co-hosting management page, includes:
displaying a fourth prompt object in response to the trigger operation for the third adjustment control in the co-hosting management page; and
in response to a fifth operation triggered for the fourth prompt object, switching the first target interface from the highlighted state to the non-highlighted state.

According to a possible embodiment, the method further includes:
in response to a sixth operation triggered for the fourth prompt object, sending a control state adjustment request to a host terminal; where the control state adjustment request is used for requesting to switch the first adjustment control corresponding to the first target interface from a first control display state to a second control display state.

According to a possible embodiment, the method further includes:
after a third prompt object is received from a host terminal, displaying the third prompt object; the third prompt object is used for describing a change of the interface display state of the first target interface.

An apparatus for displaying co-hosting is provided according to the embodiments of the present disclosure, the apparatus includes:
a first display unit, configured to display a first co-hosting page; where the first co-hosting page including multiple candidate user interfaces;
a second display unit, configured to display a gift panel in response to a trigger operation for a first target interface among the multiple candidate user interfaces; where the gift panel includes at least one virtual gift and a first adjustment control;
a first adjustment unit, configured to adjust an interface display state of at least one to-be-adjusted user interface among the multiple candidate user interfaces on the first co-hosting page in response to a trigger operation for the first adjustment control in the gift panel; where the at least one to-be-adjusted user interface includes the first target interface.

An apparatus for displaying co-hosting is provided according to the embodiments of the present disclosure, the apparatus includes:
a third display unit, configured to display a second co-hosting page; the second co-hosting page including multiple candidate user interfaces, and the multiple candidate user interfaces including a first target interface corresponding to a guest terminal; and
a second adjustment unit, configured to, if the first target interface is in the highlighted state, switch the first target interface from a highlighted state to a non-highlighted state in response to a fourth operation triggered for the second co-hosting page.

An electronic device is provided according to the embodiments of the present disclosure, where the electronic device includes a processor and a memory;
the memory is configured to store instructions or computer programs;
the processor is configured to execute the instructions or computer programs in the memory to cause the electronic device to implement the method for displaying co-hosting according to any one of the embodiments provided by the present disclosure.

A computer readable medium is provided according to the embodiments of the present disclosure, where instructions or computer programs are stored in the computer readable medium, and when the instructions or computer programs are run on a device, the device is caused to implement the method for displaying co-hosting according to any one of the embodiments provided by the present disclosure.

A computer program product is provided according to the embodiments of the present disclosure, where the computer program product includes a computer program carried on a non-transitory computer readable medium, and the computer program includes program instructions for implementing the method for displaying co-hosting according to any one of the embodiments.

### BRIEF DESCRIPTION OF THE DRAWINGS

In order to more clearly illustrate the technical solutions in the embodiments of the present disclosure or the related art, the accompanying drawings that need to be used in the description of the embodiments or the related art will be briefly introduced as follows. Obviously, the accompanying drawings in the following description illustrate merely some embodiments described in the present disclosure. Those skilled in the art can obtain other drawings according to these drawings without creative efforts.
Figure1 is a schematic diagram of a first co-hosting page provided by an embodiment of the present disclosure;
Figure 2 is a schematic diagram of a first co-hosting page provided by the embodiment of the present disclosure;
Figure 3 is a schematic diagram of a first co-hosting page provided by the embodiment of the present disclosure;
Figure 4 is a schematic diagram of a first co-hosting page provided by the embodiment of the present disclosure;
Figure 5 is a flow chart of a method for displaying co-hosting provided in the embodiment of the present disclosure;
Figure 6 is a schematic diagram of a gift panel provided by the embodiment of the present disclosure;
Figure 7 is a schematic diagram of a first co-hosting page provided by the embodiment of the present disclosure;
Figure 8 is a schematic diagram of a first co-hosting page provided by the embodiment of the present disclosure;
Figure 9 is a schematic diagram of a first co-hosting page provided by the embodiment of the present disclosure;
Figure10 is a schematic diagram of a first co-hosting page provided by the embodiment of the present disclosure;
Figure 11 is a schematic diagram of a first co-hosting page provided by the embodiment of the present disclosure;
Figure12 is a schematic diagram of a co-hosting management page provided by the embodiment of the present disclosure;
Figure 13 is a schematic diagram of a second co-hosting page provided by the embodiment of the present disclosure;
Figure 14 is a schematic diagram of a first co-hosting page provided by the embodiment of the present disclosure;
Figure 15 is a schematic diagram of a first co-hosting page provided by the embodiment of the present disclosure;
Figure 16 is a flow chart of another method for displaying co-hosting provided by the embodiment of the present disclosure;
Figure 17 is a schematic structural diagram of an apparatus for displaying co-hosting provided in the embodiment of the present disclosure;
Figure 18 is a schematic structural diagram of another apparatus for displaying co-hosting provided by the embodiment of the present disclosure; and
Figure 19 is a schematic structural diagram of an electronic device provided by the embodiment of the present disclosure.

### DETAILED DESCRIPTION OF EMBODIMENTS

In order to facilitate the understanding of the technical solution of the present disclosure, some technical terms involved in the present disclosure are firstly introduced below.

A live streaming viewer refers to a person who watches a live streaming room by means of a certain electronic device. Put it another way, live streaming viewer refers to other user in the live streaming room except the host.

A guest participating in the co-hosting refers to a live streaming viewer who is conducting the co-hosting successfully with the host in the live streaming room. In addition, the guest participating in the co-hosting is not limited in these embodiments of the present disclosure. For example, in some applications scenarios (for example, the scene where at least one host implements the co-hosting), the guest participating in the co-hosting may be the host of another live streaming room. As another example, in some application scenarios (for example, the scenario where the host establishes a co-hosting with an ordinary user), the guest participating in the co-hosting may be the ordinary user (that is, not a host). It can be seen that, the guest participating in the co-hosting in the first live streaming room may be the host of the second live streaming room, or an ordinary user who is not a host and is watching in the first live streaming room. The second live streaming room is different from the first live streaming room.

A co-hosting participator refers to a user who is in the co-hosting state in the live streaming room. For example, the interaction participator can be the host in the live streaming room, or any guest participating in the co-hosting in the live streaming room.

The host terminal refers to the client terminal corresponding to the host (that is, the user terminal corresponding to the host), or the electronic device used by the host when performing live streaming.

The guest terminal refers to the electronic device used by the guest participating in the co-hosting (that is, the client terminal corresponding to the guest participating in the co-hosting).

Based on the above technical terms, the technical solution of the present disclosure will be described below.

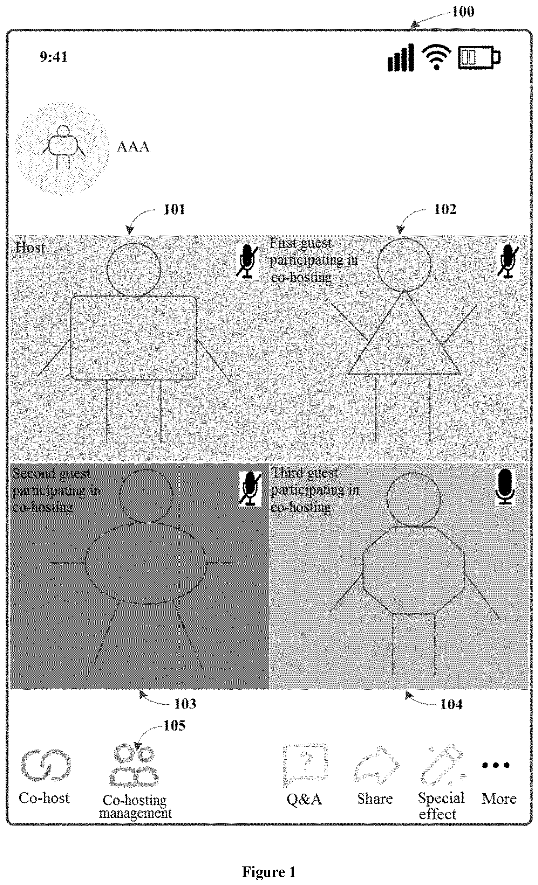

The inventor found in the research on some live streaming co-hosting schemes that co-hosting display interface (for example, the interface 101 as shown in Figure 1) of the host and the co-hosting display interface (for example, the interface 102, interface 103, and interface 104 as shown in Figure 1) of each guest participating in the co-hosting are often displayed in the display page of a certain co-hosting live streaming room. In addition, the display status (for example, the interface display size and the interface display position, etc.) of these co-hosting display interfaces usually remains unchanged during live streaming process of the co-hosting, which may cause the live streaming viewers in the co-hosting live streaming room to be unable to quickly focus on those co-hosting participators who are speaking (or participating in certain activities), resulting in poor display effect of the co-hosting on the display page.

Based on the above findings, in order to solve the technical problems described in the background section, the embodiment of the present disclosure provides a method for displaying co-hosting, which is applied to the host terminal. The method includes: in a case that the first co-hosting page is displayed on the host terminal and the first co-hosting page includes multiple candidate user interfaces, after the host terminal receives an operation triggered by the host for a first target interface among these candidate user interfaces, a gift panel is displayed, and the gift panel includes at least one virtual gift and a first adjustment control. In this way, after receiving the trigger operation for the first adjustment control, the host terminal adjusts the interface display state of at least one to-be-adjusted user interface among the multiple candidate user interfaces on the first co-hosting page. The at least one to-be-adjusted user interface includes a first target interface, so that the display state of the first target interface (and some other interfaces) on the first co-hosting page can be changed, thereby enabling the host to control the interface display state of different co-hosting participators on the first co-hosting page. By doing so, the host can adjust the interface display state of some co-hosting participators on the first co-hosting page according to the interface display requirements under different live streaming scenarios (for example, multi-person debate, multi-player fight, multi-player game and so on), thereby effectively ensuring that live streaming viewers can quickly focus on those co-hosting participators who are speaking (or participating in certain activities), which is beneficial to improve the display effect of co-hosting.

In addition, the entity executing the method for displaying co-hosting is not limited in the embodiments of the present disclosure. For example, the method for displaying co-hosting provided in the embodiments of the present disclosure can be implemented by an electronic device. Such electronic device may include but are not limited to a smartphone, a tablet computer, and a notebook computer, a personal digital assistant (PDA) and the like.

In order to enable those skilled in the art to further understand the solution of the present disclosure, the technical solutions in the embodiments of the present disclosure will be clearly and completely described below in conjunction with the accompanying drawings in the embodiments of the present disclosure. Obviously, the described embodiments are merely a part of the embodiments of the present disclosure, not all the embodiments. Based on the embodiments in the present disclosure, any other embodiments obtained by the skilled in the art without creative efforts fall within the scope of the present disclosure.

In order to further understand the technical solutions provided by the present disclosure, the method for displaying co-hosting provided by the embodiments of the present disclosure will be described below with reference to some drawings.

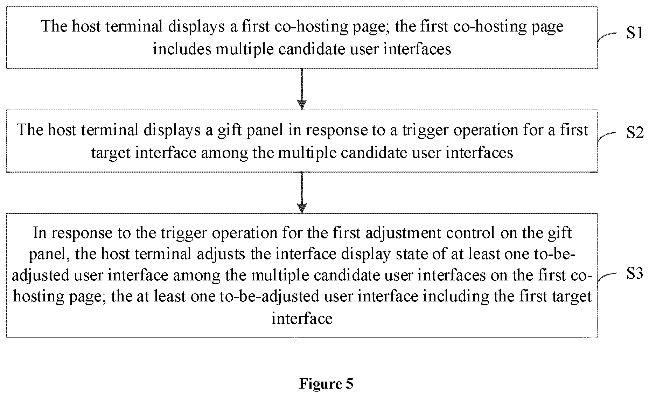

As shown in Figure 5, the method for displaying co-hosting provided by the embodiment of the present disclosure includes S1-S2.

S1: the host terminal displays a first co-hosting page; the first co-hosting page includes multiple candidate user interfaces.

The first co-hosting page refers to the co-hosting page of the live streaming room displayed on the host terminal. The co-hosting page of the live streaming room is used to display the co-hosting live streaming status of a certain co-hosting live streaming room; and the co-hosting live streaming room can include the host (that is, the user of the above-mentioned host terminal) and at least one guest participating in the co-hosting.

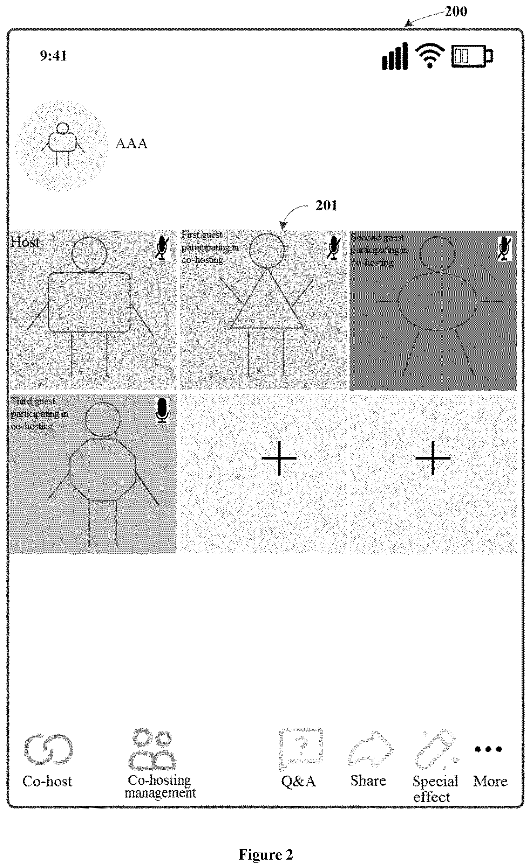

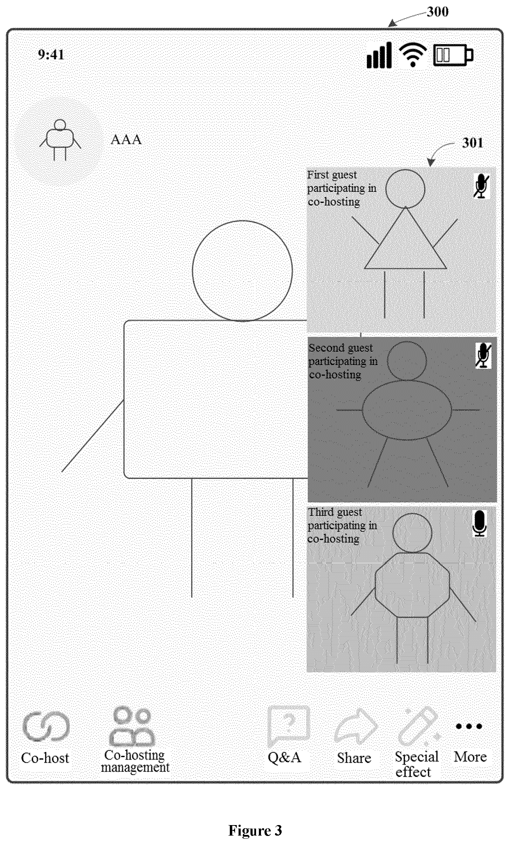

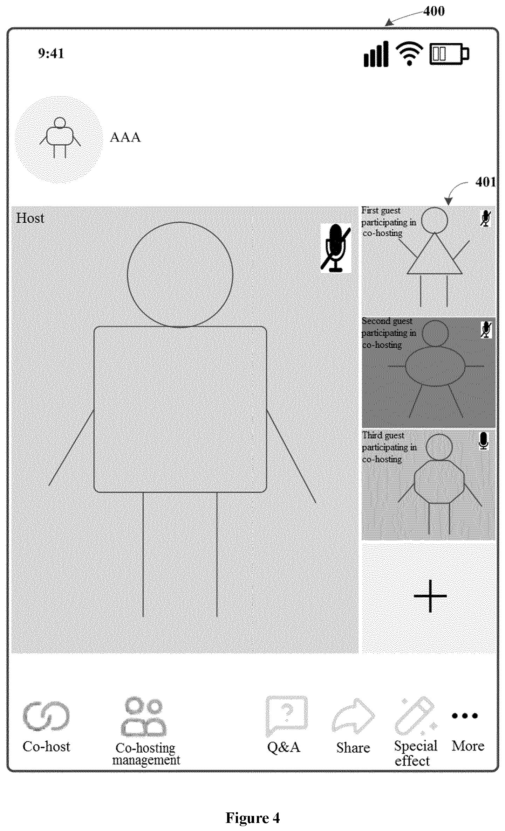

In addition, this embodiment of the present disclosure does not limit the first co-hosting page. For example, the first co-hosting page can be the page 100 shown in Figure 1, the page 200 shown in Figure 2, the page 300 shown in Figure 3 or the page 400 shown in Figure 4. The page 100 displays the co-hosting live streaming room according to a first interface layout; the page 200 displays the co-hosting live streaming room according to a second interface layout; the page 300 displays the co-hosting live streaming room according to a third interface layout; and the page 400 displays the co-hosting live streaming room according to a fourth interface layout.

It should be noted that the difference between the first interface layout and the second interface layout is that the number of user interfaces involved in the first interface layout is inconstant, while the number of user interfaces involved in the second interface layout is constant. Similarly, the difference between the third interface layout and the fourth interface layout is that the number of user interfaces involved in the third interface layout is inconstant, while the number of user interfaces involved in the fourth interface layout is constant.

The "candidate user interface" is used to display the co-hosting display state (for example, whether to turn on the voice, whether to turn on the camera and so on) of the co-hosting participators (for example, the host or a guest participating in the co-hosting) in the co-hosting live streaming room.

In addition, the embodiments of the present disclosure do not limit the "multiple candidate user interfaces". For example, the multiple candidate user interfaces may include the host display interface (that is, the co-hosting display interface of the host) and the co-hosting display interfaces of N guests participating in the co-hosting. The host display interface may be a display window of the host, which is used to display the real-time video stream of the host or the image preset by the host. The co-hosting display interface may be a display window of the user participating in co-hosting with the host, which is used to display the real-time video stream of the co-hosting user or the preset image of the co-hosting user. It can be seen that the host display interface is used to display the co-hosting display state (for example, whether the voice is turned on, whether the camera is turned on, etc.) of the host in the live streaming room. The co-hosting display interface of the n^{th} guest participating in the co-hosting is used to display the co-hosting display state (for example, whether to turn on the voice, whether to turn on the camera, etc.) of the n^{th} guest participating in the co-hosting in the live streaming room. n is a positive integer, n≤N, N is a positive integer, and N represents the number of guests participating in the co-hosting in the live streaming room. For better understanding, the following will be illustrated in combination with examples.

As an example, as shown in Figure 1, in the case that the above-mentioned first co-hosting page is the page 100 as shown in Figure 1, the "multiple candidate user interfaces" may include interface 101, Interface 102, interface 103, and Interface 104, as shown in Figure 1. The interface 101 is used to display co-hosting display state (for example, the microphone is mute and the camera is on) of the host in the co-hosting live streaming room; the interface 102 is used to display the co-hosting display state (for example, the microphone is mute and the camera is on) of the first guest participating in the co-hosting in the co-hosting live streaming room; the interface 103 is used to display the co-hosting display state (for example, the state that the microphone is mute and the camera is on) of the second guest participating in the co-hosting in the co-hosting live streaming room; the interface 104 is used to display the co-hosting display state (for example, the state that the microphone is mute and the camera is on) of the third guest participating in the co-hosting in the co-hosting live streaming room.

Based on the above relevant content of S1, it can be seen that for the host terminal used by the host, when the first co-hosting page (for example, page 100 shown in Figure 1) is displayed on the host terminal, because there are multiple candidate user interfaces (for example, the interface 101, interface 102, interface 103, and interface 104 shown in Figure 1) displayed on the first co-hosting page, the host can not only know the co-hosting display state of each co-hosting participator from the first co-hosting page, but also can manage and control these candidate user interfaces (for example, similar to the interface management and control processes shown in S2-S3 below ).

S2: the host terminal displays a gift panel in response to a trigger operation for a first target interface among the multiple candidate user interfaces.

The first target interface refers to a candidate user interface selected by the host for implementing interface display state adjustment (that is, a candidate user interface selected by the host to implement interface display state adjustment process). For example, in the case that the first co-hosting page is the page 100 shown in Figure 1 and the "multiple candidate user interfaces" include the interface 101, interface 102, interface 103 and interface 104 shown in Figure 1, the host terminal can regard the interface 102 as the first target interface after receiving the click operation triggered for the interface 102, so that the interface display state of the interface 102 can be adjusted subsequently.

In addition, the embodiment of the present disclosure does not limit the first target interface. For example, the first target interface may be a co-hosting display interface of a guest participating in the co-hosting (for example, the interface 102, interface 103, or interface 104 shown in Figure 1). That is, for the host terminal, the user of the host terminal (that is, the host) can use the host terminal to adjust the interface display state of the co-hosting display interface of any guest participating in the co-hosting, which is beneficial to improve the interface operation experience of the host.

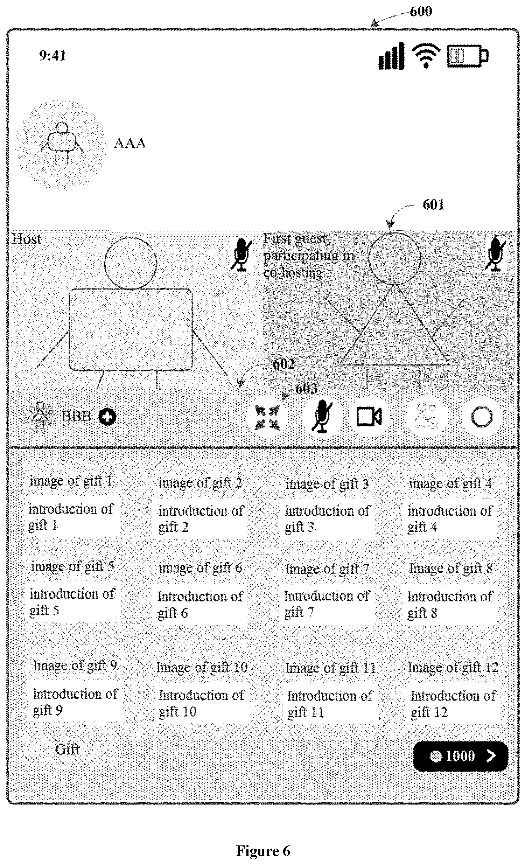

The gift panel is used to provide a function of sending gift to the guest terminal corresponding to the first target interface. It can be seen that at least one virtual gift (for example, gifts shown in Figure 6) is displayed on the gift panel. In this way, when the host terminal displays the gift panel, the user of the host terminal can select one or more of these virtual gifts to send to the guest terminal corresponding to the first target interface.

In addition, a first adjustment control (for example, a zoom-in control 603 shown in Figure 6) can be added on the gift panel so that the first adjustment control can assist the user of the host terminal to realize the adjustment of the interface display state (for example, the interface display size and the interface display position and so on) of the first target interface. In this way, the adjustment of the interface display state can be implemented based on the related gift panel. Through the combination of the gift function and the interface adjustment function, it is convenient for users, improving the interaction efficiency. The first adjustment control refers to a control deployed on the gift panel that has a function of adjusting the interface display state. The interface display size indicates the size of the area occupied by the first target interface on the first co-hosting page. The interface display position indicates the position of the first target interface on the first co-hosting page.

In addition, the embodiments of the present disclosure do not limit the implementation of the gift panel. For example, when the first target interface is the interface 601 shown in Figure 6, the gift panel may be the gift page 602 associated with the interface 601; and the gift panel can be displayed in response to a trigger operation (for example, a click operation) on the first target interface.

It can be seen that: when the host terminal displays the first target interface (for example, the interface 601 shown in Figure 6) and the first target interface is used to display a guest participating in the co-hosting, the host terminal can display a gift panel (for example, the gifting page 602 shown in Figure 6) associated with the first target interface after receiving the trigger operation (for example, click operation) on the first target interface. Subsequently, the user of the host terminal can trigger the adjustment of the interface display state for the first target interface by means of the gift panel.

In addition, the embodiments of the present disclosure do not limit the first adjustment control. For example, when the gift panel is the gifting page 602 shown in Figure 6, the first adjustment control may be the zoom-in control 603 shown in Figure 6. It should be noted that the embodiments of the present disclosure do not limit the zoom-in control 603, for example, the zoom-in control 603 is used to realize the enlargement of the interface, or to change the position of the interface and enlarge it. The disclosure is not limited thereto, and the first adjustment control may be a control that highlights the interface in other ways.

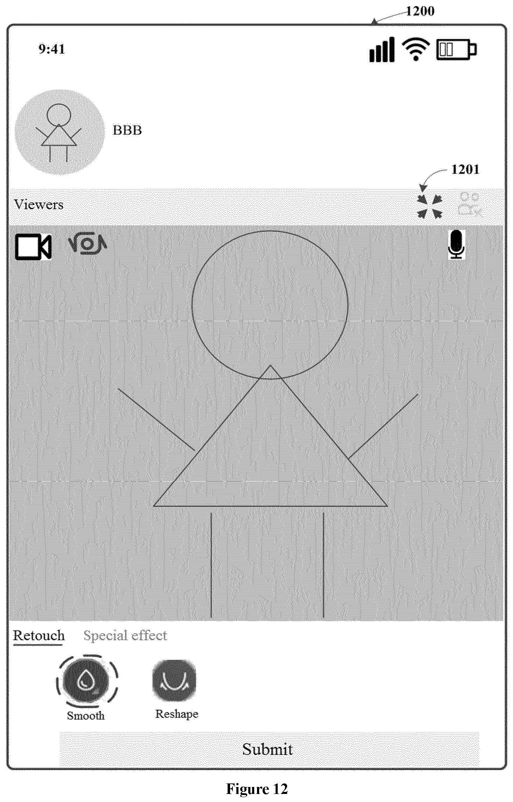

In addition, the embodiments of the present disclosure do not limit the representation of the first adjustment control. For example, when the first target interface is not in the highlighted state, the first adjustment control can be represented as the icon of zoom-in control 603 in Figure 6, indicating that a highlighting process can be performed for the first target interface. As another example, when the first target interface is in the non-highlighted state, the first adjustment control can be represented as the icon of the control 1201 in Figure 12, indicating that a highlight cancellation process can be performed for the first target interface.

In addition, the embodiments of the present disclosure do not limit the way to display the gift panel. For example, the gift panel can be displayed by using any related or future method.

In fact, for better user experience, the gift panel can be displayed by means of the first co-hosting page. Based on this, the embodiment of the present disclosure provides a possible implementation of the S2, which may be embodied as follows. The host terminal displays, in response to the trigger operation for the first target interface, the gift panel on the first co-hosting page (for example, the gifting page 602 is displayed in the form of a drop-down page in the page 600, as shown in Figure 6), so that the user of the host terminal can view the gift panel without leaving the first co-hosting page, thereby improving the user experience.

Based on the relevant content of S2, for the host terminal used by the host, when the first co-hosting page (for example, the page 100 shown in Figure 1) is displayed on the host terminal, and a first target interface (for example, the interface 102 shown in Figure 1) is displayed on the first co-hosting page, after the host terminal receives a trigger operation (for example, a click operation) for the first target interface, the host terminal can display the gift panel (for example, the gifting page 602 shown in Figure 6 ) associated with the first target interface. By doing so, the user of the host terminal can, subsequently, adjust the interface display state for the first target interface by means of the first adjustment control configured in the gift panel.

S3: In response to the trigger operation for the first adjustment control on the gift panel, the host terminal adjusts the interface display state of at least one to-be-adjusted user interface among the multiple candidate user interfaces on the first co-hosting page; the at least one to-be-adjusted user interface including the first target interface.

The to-be-adjusted user interface refers to a candidate user interface for which the interface display state adjustment is to be performed; and the embodiment of the present disclosure does not limit the number of the to-be-adjusted user interfaces, for example, it can be determined according to different application scenarios.

In addition, this embodiment of the present disclosure does not limit the "at least one to-be-adjusted user interface". For example, in some application scenarios, the "at least one to-be-adjusted user interface" may only include the first target interface. As another example, in some other application scenarios, the "at least one to-be-adjusted user interface" includes not only the first target interface, but also other interfaces (for example, the second target interface described below).

The interface display state of the t^{th} to-be-adjusted user interface refers to the state that the t^{th} to-be-adjusted user interface is displayed on the first co-hosting page, where t is a positive integer, t≤T, T is a positive integer, and T represents the number of to-be-adjusted user interfaces.

In addition, this embodiment of the present disclosure does not limit the "interface display state of the t^{th} to-be-adjusted user interface", for example, it may include the interface display size of the t^{th} to-be-adjusted user interface, and the interface display position of the t^{th} to-be-adjusted user interface. The interface display size is used to indicate the size of the area occupied by the t^{th} to-be-adjusted user interface on the first co-hosting page. The interface display position is used to indicate the position of the t^{th} to-be-adjusted user interface on the first co-hosting page.

In addition, this embodiment of the present disclosure does not limit the implementation of "the interface display state of the t^{th} to-be-adjusted user interface", for example, it may be a standard interface state of the t^{th} to-be-adjusted user interface, a highlighted state of the t^{th} to-be-adjusted user interface, and a deemphasized state of the t^{th} to-be-adjusted user interface.

The "standard interface state of the t^{th} to-be-adjusted user interface" refers to the default interface display state used while displaying the t^{th} to-be-adjusted user interface on the first co-hosting page (that is, unadjusted interface display status). For example, in the case of the t^{th} to-be-adjusted user interface is used to display the first guest participating in the co-hosting, the standard interface state of the t^{th} to-be-adjusted user interface may be the state presented by the interface 102 in Figure 1, the state presented by the interface 201 in Figure 2, the state presented by the interface 301 in Figure 3, or the state presented by the interface 401 in Figure 4.

It should be noted that the first co-hosting page can be displayed in different interface layouts in different application scenarios, which results in different standard interface state for different candidate user interfaces. For example, when the first co-hosting page is implemented by using the first interface layout shown in Figure 1 or the second interface layout shown in Figure 2, and these candidate user interfaces include the host display interface and the co-hosting display interfaces of N guests participating in the co-hosting, the standard interface state (for example, the state presented by interface 101 in Figure 1) of the host display interface is consistent with the standard interface state (for example, the state presented by the interface 102-interface 104 in Figure 1) of the co-hosting display interfaces of all guests participating in the co-hosting. As another example, when the first co-hosting page is implemented by using the third interface layout shown in Figure 3 or the fourth interface layout shown in Figure 4, and these candidate user interfaces include the host display interface and the co-hosting display interfaces of the N guests participating in the co-hosting, the standard interface state of the host display interface is different from that of the co-hosting display interface of each guest participating in the co-hosting, but the interface standard states of the co-hosting display interfaces of all guests participating in the co-hosting are consistent with each other.

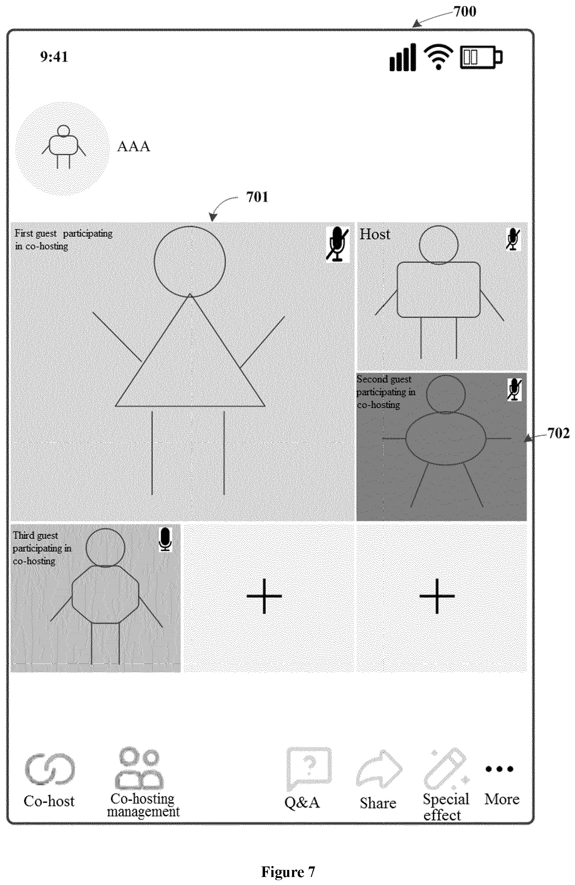

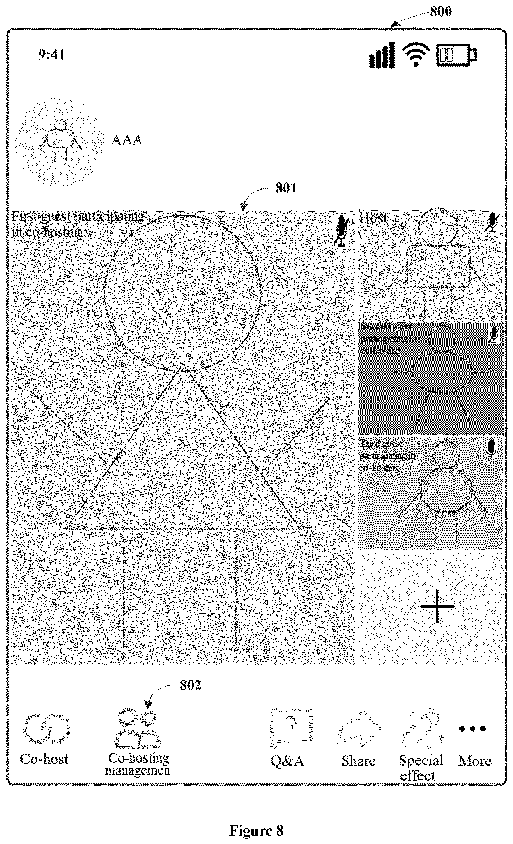

The "highlighted (emphasized display) state of the t^{th} to-be-adjusted user interface" refers to the interface display state used when the t^{th} to-be-adjusted user interface is highlighted on the first co-hosting page (that is, the interface display state after the highlighting adjustment is performed). It should be noted that this embodiment of the present disclosure does not limit the manner for the highlighting, for instance, it may include increasing the interface display size of the t^{th} to-be-adjusted user interface and/or moving the t^{th} to-be-adjusted user interface to the eye-catching position (for example, the position of the interface 701 in Figure 7 or the position of the interface 801 in Figure 8, etc.). For better understanding, the following will be described in combination with examples.

As an example, when the t^{th} to-be-adjusted user interface is used to display the first guest participating in the co-hosting, and the standard interface state of the t^{th} to-be-adjusted user interface is the state presented by the interface 102 in Figure 1 or the interface 201 in Figure 2, the highlighted state of the t^{th} to-be-adjusted user interface may be the state presented by the interface 701 in Figure 7. As another example, when the t^{th} to-be-adjusted user interface is used to display the first guest participating in the co-hosting, and the standard interface state of the t^{th} to-be-adjusted user interface is the state presented by interface 301 in Figure 3 or the interface 401 in Figure 4, the highlighted state of the t^{th} to-be-adjusted user interface may be the state presented by interface 801 in Figure 8.

It should be noted that the page 700 shown in Figure 7 refers to the page displayed after the host terminal receives a trigger operation on the first adjustment control in the gifting panel corresponding to the interface 102 in Figure 1 or the interface 201 in Figure 2. In addition, the page 800 shown in Figure 8 refers to the page displayed after the host terminal receives a trigger operation on the first adjustment control in the gifting panel corresponding to the interface 301 in Figure 3 or the interface 401 in Figure 4.

It should also be noted that, for the "multiple candidate user interfaces", the highlighted states of all candidate user interfaces are substantially the same, the detail of which will be omitted here for conciseness.

It should be noted that this embodiment of the present disclosure does not limit the implementation of the "highlighted state", for example, it can be implemented by displaying in a zoomed-in mode, centered mode, or in a preset frame that is different from other co-hosting users, or in a display frame distinguishable from other co-hosting users.

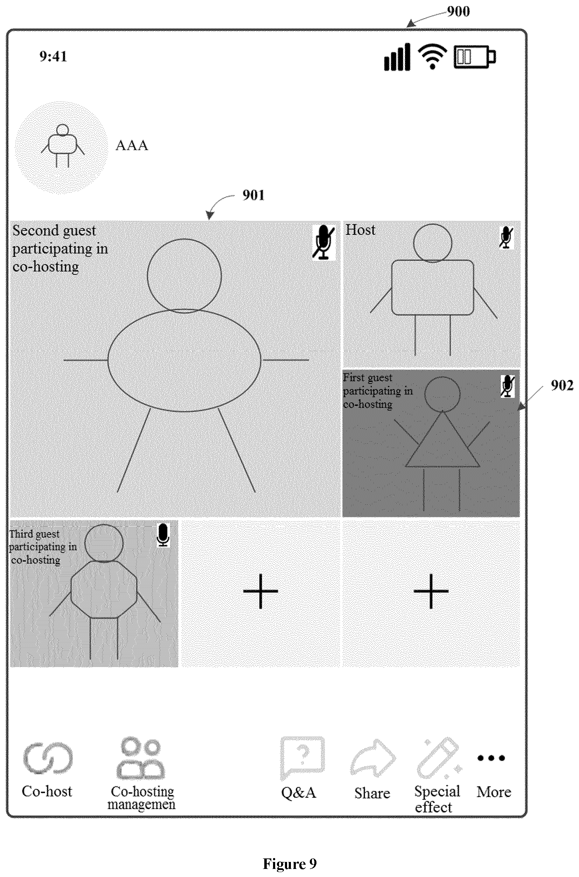

The "deemphasized (deemphasized display) state of the t^{th} to-be-adjusted user interface" refers to the interface display state used to deemphasize the display of the t^{th} to-be-adjusted user interface (that is, the interface display state after the deemphasizing adjustment process is performed), when an interface other than the t^{th} to-be-adjusted user interface is highlighted on the first co-hosting page. For example, in the case that the t^{th} to-be-adjusted user interface is used to display the first guest participating in the co-hosting, and the standard interface state of the t^{th} to-be-adjusted user interface is the state presented by the interface 102 in Figure 1 or the state presented by the interface 201 in Figure 2, the deemphasized state of the t^{th} to-be-adjusted user interface may be the state presented by the interface 902 in Figure 9.

It should be noted that, for the "multiple candidate user interfaces", the deemphasized states of all candidate user interfaces are substantially the same, the detail of which will be omitted here for conciseness.

Based on the above relevant content of "the interface display state of the t^{th} to-be-adjusted user interface", it can be known that, for the host terminal used by the host, when the host terminal displays the first co-hosting page and there are multiple candidate user interfaces displayed on the first co-hosting, the host can use the host terminal to adjust the interface display state of one or more of these candidate user interfaces, so that the first co-hosting page subjected to the interface adjustment can meet the interface display requirement of the host as much as possible, which is beneficial to improve the interface operation experience of the host. Put it another way, for each candidate user interface displayed on the first co-hosting page, the host can control the interface display state of the candidate user interface to switch from one state to another state (for example, switch from the standard interface state to the highlighted state, switch from the deemphasized state to the highlighted state, switch from the highlighted state to the standard interface state, or switch from the highlighted state to the deemphasized state, etc.).

In addition, the embodiment of the present disclosure does not limit the implementation of the S3. For better understanding, the following will be described in combination with scenarios.

Case 1, for some application scenarios (for example, scenarios of highlighting single-person such as single-person speech, single-person performance, etc.), it may only need to adjust the co-hosting interface display of a certain guest participating in the co-hosting. In this case, the embodiment of the present disclosure provides a possible implementation of the S3, which may be embodied as follows. The host adjusts the interface display state of the first target interface in response to the trigger operation on the first adjustment control in the gift panel.

That is, for the host terminal used by the host, when the gift panel (for example, the gifting page 602 shown in Figure 6) is displayed on the host terminal, the host can adjust the interface display state of the first target interface on the first co-hosting page after the host terminal receives the trigger operation (for example, click operation) on the first adjustment control in the gift panel, so that the interface display state of the first target interface can be changed to meet the interface management and control requirements of the host, thereby improving the interface operation experience of the host.

In addition, this embodiment of the present disclosure does not limit the implementation of the step of "adjusting the interface display state of the first target interface on the first co-hosting page", for example, it may be embodied as: adjusting, on the first co-hosting page, the interface display state of the first target interface from the first interface display state to the second interface display state.

The first interface display state refers to the interface display state before the adjustment of the first target interface, so that the first interface display state can indicate that the state of the first target interface presented on the first co-hosting page, prior to the host terminal receives the trigger operation for the first adjustment control in the gifting panel corresponding to the first target interface.

In addition, the embodiment of the present disclosure does not limit the first interface display state. For better understanding, illustration is made in the following with two examples.

Example 1, the first interface display state may be the non-highlighted state. The non-highlighted state refers to the interface display state used when the first target interface is not highlighted on the first co-hosting page; and the embodiment of the present disclosure does not limit the non-highlighted state, for example, it may be the standard interface state or deemphasized state.

It can be seen that, in some cases (for example, the interface display state of the first target interface has never been adjusted, etc.), the first interface display state may be the standard interface state. That is, for the first target interface displayed on the host terminal, before the host terminal receives the trigger operation for the first adjustment control in the gifting panel corresponding to the first target interface, if the first target interface has never been adjusted, it can be determined that the first target interface is still displayed according to the default interface display state, so it can be determined that the first interface display state is the standard interface state of the first target interface.

In other cases (for example, the latest adjustment for the interface display state of the first target interface is a deemphasizing adjustment, etc.), the first interface display state may be a deemphasized state. That is, for the first target interface displayed on the host terminal, before the host terminal receives the trigger operation for the first adjustment control in the gifting panel corresponding to the first target interface, if the latest adjustment for the interface display state of the first target interface is a deemphasizing adjustment, it can be determined that the first target interface is in the deemphasized state, so it can be determined that the first interface display state is the deemphasized state of the first target interface state.

Example 2, in some cases (for example, the latest adjustment for the interface display state of the first target interface is a highlighting adjustment, etc.), the first interface display state may be the highlighted state. It should be noted that the content related to the highlighted state can be referred to the above description.

Based on the relevant content of the first interface display state above, it can be known that, in some cases, the first interface display state can be a non-highlighted state (for example, the standard interface state or the deemphasized state), so the first interface display can indicate that the interface display state before adjustment of the first target interface is not the highlighted state, and the first interface display state can indicate that the highlighting adjustment can be performed on the first target interface. However, in some other cases, the first interface display state may be the highlighted state, so the first interface display state can indicate that the interface display state before adjustment of the first target interface is the highlighted state, and the first interface display state can indicate that the highlight cancellation process can be performed on the first target interface.

The "second interface display state" refers to the adjusted interface display state of the first target interface, so the second interface display state can indicate that the state of the first target interface presented on the first co-hosting page after the host terminal receives the trigger operation for the first adjustment control in the gifting panel corresponding to the first target interface.

In addition, the "second interface display state" is different from the "first interface display state". For better understanding, illustration is made in the following with two examples.

Example 1, if the first interface display state is the non-highlighted state, then the second interface display state may be the highlighted state.

In other words, if the first interface display state is the standard interface state or the deemphasized state, then the second interface display state may be the highlighted state. It can be seen that, for the first target interface displayed on the host terminal, if the first target interface is in the standard interface state (for example, the state presented by the interface 102 in Figure 1), or if the first target interface is in the deemphasized state (for example, the state presented by the interface 902 in Figure 9 ), after the host terminal receives the trigger operation for the first adjustment control in the gifting panel corresponding to the first target interface, the host terminal switches the interface display state of the first target interface to the highlighted state (for example, the interface display state shown in the interface 701 in Figure 7, etc.) on the first co-hosting page, so that the first target interface can be displayed in a more eye-catching manner on the first co-hosting page. As a result, all the viewers in the co-hosting live streaming room can more easily focus on the first target interface, so that these viewers in the live streaming room can watch the content displayed by the first target interface (e.g., point of debate, etc.) better.

Example 2, if the first interface display state is the highlighted state, then the second interface display state may be the non-highlighted state.

In other words, for the first target interface displayed on the host terminal, if the first target interface is in the highlighted state (for example, the interface display state shown in interface 701 in Figure 7, etc.), then after the host terminal receives the trigger operation for the first adjustment control in the gifting panel corresponding to the first target interface, the host terminal switches the interface display state of the first target interface from the highlighted state to the non-highlighted state (for example, the standard interface state shown in the interface 102 in Figure 1 or the deemphasized state shown in the interface 902 in Figure 9, etc.) on the first co-hosting page, to end the highlighting of the first target interface, so that all viewers in the live streaming room will no longer focus on the first target interface.

It can be seen that in some application scenarios (for example, scenarios of highlighting single-person such as single-person speech and single-person performance), if the host terminal is displaying the first target interface in the highlighted state, then after the host terminal receives the trigger operation for the first adjustment control in the gifting panel corresponding to the first target interface, the host terminal switches the interface display state of the first target interface from the highlighted state (for example, the state presented by the interface 701 in Figure 7) to the standard interface state (for example, the state presented by the interface 102 in Figure 1 ) on the first co-hosting page, so that the highlighting of the first target interface can be ended.

Case 2, in some application scenarios (such as single-person speech, single-person performance and other scenarios of highlighting single-person), in order to further improve the live viewing experience of the viewer in the live streaming room, not only a certain user interface can be highlighted, but also all other user interfaces can be deemphasized, so that the viewers in the live streaming room can better focus on the highlighted user interface.

Based on this, the embodiment of the present disclosure further provides a possible implementation of the S3. In this implementation, when the "at least one to-be-adjusted user interface" includes the first target interface and at least one third target interface (for example, all other interfaces except the first target interface), S3 may be embodied as follows: in response to the trigger operation for the first adjustment control in the gift panel corresponding to the first target interface, the host terminal adjusts, on the co-hosting page, the interface display state of the first target interface according to first adjustment method, and the interface display state of each third target interface according to the second adjustment method.

The third target interface refers to the candidate user interface whose display effect needs to be deemphasized while highlighting the first target interface, so that these third target interfaces can set off the highlight effect of the first target interface better.

In addition, this embodiment of the present disclosure does not limit the "at least one third target interface", for example, in some application scenarios (for example, when the first co-hosting page prior to the adjustment is displayed according to the first interface layout shown in Figure 1 or the second interface layout shown in Figure 2, or the third interface layout shown in Figure 3), the "at least one third target interface" may include all multiple candidate user interfaces except for the first target interface.

It can be seen that when the host terminal is displaying multiple candidate user interfaces according to the first interface layout, the second interface layout or the third interface layout, after the host terminal receives the trigger operation on the first adjustment control in the gifting panel corresponding to the first target interface (such as, interface 102 shown in Figure 1) among the multiple candidate user interfaces, the host terminal may regard all the multiple candidate interfaces other than first target interface (for example, the interface 101 , the interface 103 , and interface 104 , as shown in Figure 1) as the third target interface to perform the adjustment.

The first adjustment method refers to the adjustment method used for adjusting the interface display state for the first target interface (for example, the interface 102 shown in Figure 1).

In addition, the embodiment of the present disclosure does not limit the determination of the first adjustment method, for example, it may be embodied as follows. The first adjustment method may be determined according to the current interface display state of the first target interface. For better understanding, illustration is made in connection with the adjustment of the first target interface.

As an example, the adjustment of the first target interface may be embodied as follows: after the host receives the trigger operation for the first adjustment control in the gift panel corresponding to the first target interface, if it is determined that the first target interface is in the standard interface state prior to the adjustment, then it can be determined that the first adjustment method is used to adjust the interface display state of the first target interface from the standard interface state to the highlighted state; if it is determined that the first target interface is in the highlighted state prior to the adjustment, it can be determined that the first adjustment method is used to adjust the interface display state of the first target interface from the highlighted state to the standard interface state.

It can be seen that, for the host terminal used to display the first target interface, when the host terminal is displaying the first target interface in the standard interface state (for example, the interface 102 shown in Figure 1) , after the host terminal receives the trigger operation for the first adjustment control in the gift panel corresponding to the first target interface, the host terminal can determine that the first target interface prior to the adjustment is in the standard interface state, thus it can be inferred that the user of the host wants to highlight the first target interface, so the host terminal can determine that the first adjustment method is used to adjust the interface display state of the first target interface from the standard interface state to the highlighted state (for example, the state presented by interface 701 in Figure 7 701). By doing so, the user of the host terminal can control to highlight the first target interface.

By contrast, when the above-mentioned host terminal is displaying the first target interface in the highlighted state (for example, the interface 701 shown in Figure 7), after the host terminal receives the trigger operation for the first adjustment control in the gift panel corresponding to the first target interface, the host terminal can determine that the first target interface prior to the adjustment is in the highlighted state, so it can be inferred that the user of the host terminal wants to restore the first target interface (that is, highlight cancellation process), so the host terminal can determine that the first adjustment method is used to adjust the interface display state of the first target interface from the highlighted state to the standard interface state (for example, the state presented the interface 101 in Figure 1). In this way, the user of the host terminal can control to restore the first target interface.

In addition, this embodiment of the present disclosure does not limit the implementation of the step of "determining the first adjustment method according to the current interface display state of the first target interface", for example, it may be embodied as: determining an adjustment method corresponding to the "current interface display state of the first target interface" from a pre-built first mapping relationship, as the first adjustment method. The first mapping relationship is used to record adjustment methods corresponding to different interface display states.

Also, the embodiment of the present disclosure does not limit the first mapping relationship, for example, it may include: a correspondence between the standard interface state and a first manner, and a correspondence between the highlighted state and a second manner. The first method is used to adjust the first target interface from the standard interface state to the highlighted state; the second method is used to adjust the first target interface from the highlighted state to the standard interface state.

The "second adjustment method" refers to the adjustment method used for adjusting the interface display state for interfaces (for example, the interface 101, interface 103 or interface 104 shown in Figure 1) other than the first target interface, so that the "second adjustment method" can assist in implementing the interface management and control requirements characterized by the "first adjustment method" (for example, the need such as highlighting the first target interface, stopping highlighting the first target interface, etc.).

In addition, this embodiment of the present disclosure does not limit the determination of the second adjustment method. For example, it may be embodied as: determining the second adjustment method according to the current interface display state of interface other than the first target interface. For better understanding, illustration is made in the following with two examples.

Example 1, when there is at least one to-be-adjusted user interface (for example, the interface 101-interface 104 in Figure 1) displayed on the host terminal, and the "at least one to-be-adjusted user interface" includes the first target interface (for example, interface 102 in Figure 1) and at least one third target interface (for example, the interface 101, interface 103, and interface 104 in Figure 1), after the host terminal receives the trigger operation for the first adjustment control in the gift panel corresponding to the first target interface, if it is determined that each to-be-adjusted user interface is in the standard interface state prior to the adjustment, it can be inferred that the user of the host terminal wants to highlight the first target interface. In order to highlight the first target interface, it can be determined that the first adjustment method is used to adjust the interface display state of the first target interface from the standard interface state to the highlighted state, and also be determined that the second adjustment method is used to adjust the interface display state of each third target from the standard interface state to the deemphasized state (for example, the state presented by the interface 702 in Figure 7), so that the interface display state of each third target interface can be significantly distinguished from the interface display state of the first target interface, to further highlight the first target interface, which is beneficial to improve the highlight effect for the first target interface.

Example 2, when there is at least one to-be-adjusted user interface (for example, all the interfaces shown in Figure 7 ) displayed on the host terminal, and the "at least one to-be-adjusted user interface" includes the first target interface (for example, the interface 701 in Figure 7) and at least one third target interface (for example, all other interfaces except the interface 701 in Figure 7), after the host terminal receives the trigger operation for the first adjustment control in the gift panel corresponding to the first target interface, if it is determined that the first target interface is in the highlighted state prior to the adjustment, and the third target interfaces are all in the deemphasized state prior to the adjustment, it can be inferred that the user of the host terminal does not want to continue to highlight the first target interface. In order to restore the first target interface better, it is determined that the first adjustment method is used to adjust the interface display state of the first target interface from the highlighted state to the standard interface state, and it is also determined that the second adjustment method is used to adjust the interface display state of each third target interface from the deemphasized state to the standard interface state, so that the default interface display state of all to-be-adjusted user interfaces can be restored, thereby improving the effect of restoring the first target interface.

In addition, this embodiment of the present disclosure does not limit the implementation of the step of "determining the second adjustment method according to the current interface display state of interfaces other than the first target interface", for example, it can be implemented by using a pre-built second mapping relationship. As another example, it can be implemented by means of preset adjustment rules.

Based on the relevant content of the case 2, for some application scenarios (for example, scenarios of highlighting single-person such as single-person speech, single-person performance, etc.), after the host terminal receives the trigger operation for the first adjustment control in the gift panel corresponding to the first target interface, the host terminal can not only adjust the interface display state of the first target interface, but also adjust other interfaces other than the first target interface on the first co-hosting page, so that the adjusted first co-hosting page can better express the intention of the host (for example, to highlight the first target interface, to stop highlighting the first target interface, etc.), which can effectively improve the interface operation experience of the host terminal.

Case 3, in some application scenarios (for example, scenarios of highlighting single-person such as single-person speech, single-person performance, etc.), only one user interface may be prominently displayed on the first co-hosting page displayed by the host terminal, so that the user of the host terminal may have the following requirements: when the host terminal is displaying a certain user interface in the highlighted state (for example, the interface 701 shown in Figure 7 ), the user of the host terminal may want to cancel the highlighting of the user interface, and intend to start the highlighting of another user interface (for example, the interface 702 shown in Figure 7).

In order to meet the interface management and control requirements shown in the case 3, the embodiment of the present disclosure further provides another possible implementation of the "at least one to-be-adjusted user interface". In this embodiment, when the host terminals displays multiple candidate user interfaces (for example, all interfaces shown in Figure 7), the "multiple candidate user interfaces" include a first target interface (for example, the interface 702 in Figure 7) and a second target interface (for example, the interface 701 in Figure 7), and the host terminal is displaying the first target interface in the deemphasized state, and displaying the second target interface in the highlighted state, the "at least one to-be-adjusted user interface" may not only include the first target interface which is currently in the deemphasized state but also include the second target interface which is currently in the highlighted state. The second target interface refers to a candidate user interface for which the highlighting is to be cancelled.

Based on the previous content, the embodiment of the present disclosure further provides another possible implementation of S3. In this implementation, when the host terminal displays the first co-hosting page (for example, the page 700 shown in Figure 7), the second target interface is displayed in the highlighted state (for example, the interface 701 shown in Figure 7) on the first co-hosting page, and interfaces among the "multiple candidate user interfaces" other than the second target interface are all in the deemphasized state, the S3 may be embodied as follows: in response to the trigger operation for the first adjustment control in the gift panel corresponding to the first target interface (for example, the interface 702 shown in Figure 7), the host terminal may adjust the interface display state of the first target interface from the deemphasized state to the highlighted state (for example, the state presented by the interface 901 in Figure 9), and adjust the second target interface from the highlighted state to the deemphasized state (for example, the state presented by the interface 902 in Figure 9 ) on the first co-hosting page.

It can be seen that for some application scenarios (for example, the first co-hosting page shown in Figure 4, the first co-hosting page shown in Figure 7, or the first co-hosting page shown in Figure 8), when the second target interface is displayed in the highlighted state on the first co-hosting page, and other interfaces displayed on the first co-hosting page other than the second target interface are all in the deemphasized state, the host terminal can use the interface adjustment process for the deemphasized interface to achieve the purpose of replacing the highlighted interface on the first co-hosting page, so that the replacement for the highlighted interface can be effectively simplified, thereby improving the interface operation experience of the user of the host terminal.

Case 4, in some application scenarios (such as multi-person speech, multi-person performance, multi-person competition and other scenarios of highlighting multi-person), multiple user interfaces may be prominently displayed on the co-hosting page displayed by the host terminal. In this case, the user of the host terminal may have the requirements as follows. When the host terminal is displaying certain user interfaces in the highlighted state, in some situations (for example, alternating of debate participants or competition participants, etc.), the user of the host terminal may want to directly replace the co-hosting participator shown in a highlighted user interface with the co-hosting participator shown in a deemphasized user interface.

In order to meet the interface operation requirements shown in the case 4, the embodiment of the present disclosure further provides another possible implementation of the "at least one to-be-adjusted user interface". In this implementation, when the host terminal shows multiple candidate user interfaces and the multiple candidate user interfaces not only include multiple candidate user interfaces in the highlighted state but also include the first target interface in the deemphasized state, the "at least one to-be-adjusted user interface" may include not only the first target interface, but also the second target interface that meets a predetermined selection condition among the multiple candidate user interfaces that are in the highlighted state. The second target interface refers to a second candidate user interface for which the highlighting is to be cancelled.

The predetermined selection condition may be determined in advance, and the embodiment of the present disclosure does not limit the predetermined selection condition. For better understanding, the following will be illustrated in conjunction with the determination of the second target interface.

As an example, the determination of the second target interface may be embodied as: according to the first-in-first-out principle, selecting the second target interface from all second candidate user interfaces, so that the duration of displaying the second target interface in the highlighted state is longer than that of other interfaces in the second candidate user interfaces. That is, in a possible implementation, the predetermined selection condition may be embodied as follows: for all candidate user interfaces that are in the highlighted state on the host terminal, the duration of displaying the second target interface in the highlighted state is the maximum.

Based on the above content, the embodiment of the present disclosure further provides another possible implementation of S3. In this implementation, when the host terminal shows the first co-hosting page, and the multiple candidate user interfaces include not only multiple candidate user interfaces in the highlighted state but also include the first target interface in the deemphasized state, the S3 may be embodied as follows: in response to the trigger operation for the first adjustment control in the gift panel corresponding to the first target interface, the host terminal adjusts the interface display state of the first target interface from the deemphasized state to the highlighted state on the first co-hosting page, and adjust the second target interface from the highlighted state to the deemphasized state, where the second target interface is the interface that meets the predetermined selection condition among the multiple candidate user interfaces in the highlighted state.

It can be seen that for some application scenarios (for example, scenarios of highlighting multi-person such as multi-person debates and multi-person competitions), when multiple second candidate interfaces are displayed in the highlighted state on the first co-hosting page displayed on the host terminal, and interfaces other than the second target interfaces are all in the deemphasized state, the host terminal can use the interface adjustment process for a certain deemphasized interface (for example, the target user interface) to achieve the purpose of replacing the highlighted interface on the first co-hosting page, so that the replacement for the highlighted interface can be effectively simplified, thereby improving the interface operation experience of the user of the host terminal.

Case 5, based on the content shown in case 3 and case 4 above, in order to further improve the interface operation experience of the host, the embodiment of the present disclosure further provides another possible implementation of S3. In the implementation, when the host terminal is displaying the second target interface in the highlighted state, and displaying the first target interface in the deemphasized state, S3 may specifically include steps 11-12:
Step 11: in response to the trigger operation on the first adjustment control in the gifting panel corresponding to the first target interface in the first co-hosting page, the host terminal displays a first prompt object.

The first prompt object is used to confirm with the host whether to end the displaying of the second target interface in the highlighted state and to start the displaying of the first target interface in the highlighted state.

It can be seen that the first prompt object is used to display the first prompt information. The first prompt information is used to express the semantic information of "whether to end the displaying of the second target interface in the highlighted state and to start the displaying of the first target interface in the highlighted state".

In addition, the embodiment of the present disclosure does not limit the implementation of the first prompt object, for example, it may be implemented by means of a pop-up window, a page, or a control and so on.

In addition, in order to further improve the interface operation experience of the host, some controls (such as confirm button, cancel button, etc.) are also displayed on the first prompt object, so that these controls can assist the host to input feedback for the first prompt information displayed by the first prompt object to the host terminal.

Also, the embodiment of the present disclosure does not limit the manner of displaying the first prompt object, for example, it may be displayed via the first co-hosting page. Based on this, the embodiment of the present disclosure further provides a possible implementation of step 11, which may be embodied as follows: in response to the trigger operation on the first adjustment control in the gifting panel corresponding to the first target interface on the first co-hosting page, the host terminal displays a first prompt object on the first co-hosting page.

Based on the relevant content in step 11 above, it can be seen that for the host terminal used by the host, when the host terminal shows the first co-hosting page (for example, the page 700 shown in Figure 7), and the second target interface is displayed in the highlighted state (for example, the interface 701 shown in Figure 7) and the first target interface is displayed in the deemphasized state (for example, the interface 702 in Figure 7 ) on the first co-hosting page, after the host receives the trigger operation for the first target interface, the host terminal can display the first prompt object on the first co-hosting page, so that the user of the host terminal can not only obtain the first prompt information from the first prompt object, but also can receive the feedback from the user on the first prompt information (for example, clicking on a confirm button or clicking on a cancel button, etc.).

Step 12: in response to the first operation triggered for the first prompt object, the host terminal adjusts the interface display state of the first target interface from the deemphasized state to the highlighted state, and adjusts the second target interface from the highlighted state to the deemphasized state.

The first operation refers to a confirmation to the first prompt information displayed for the first prompt object; and the embodiment of the present disclosure does not limit the first operation, for example, when the first prompt information and a confirm button are at least displayed on the first prompt object, the first operation may be: a click operation on the confirm button.

Based on the relevant content of step 12 above, it can be seen that for the host terminal used by the host, there is a first prompt object displayed on the host terminal, and the first prompt object is used to display the semantic information of "confirm whether to end the displaying of the second target interface in the highlighted state and to start the displaying of the first target interface in the highlighted state". If the host terminal receives the first operation triggered for the first prompt object, the host terminal can confirm that the host does want to end the displaying of the second target interface in the highlighted state, and start the displaying of the first target interface in the highlighted state. In order to cater for the interface management and control intention of host, the host terminal may adjust the interface display state of the first target interface from the deemphasized state to the highlighted state, and adjust the interface display state of the second target interface from the highlighted state to the deemphasized state.

Based on the relevant content of steps 11 to 12 above, for some application scenarios (for example, a scenario of highlighting single-person or a scenario of highlighting multi-person, etc.), in the case that the host terminal shows the first co-hosting page and the second target interface is displayed in the highlighted state and the first target interface is displayed in the deemphasized state on the first co-hosting page, after the host terminal receives the trigger operation for the first target interface, the host terminal can first display the first prompt object; and after the host terminal obtains the first operation triggered for the first prompt object, the host terminal adjusts the interface display state of the first target interface from the deemphasized state to the highlighted state, and adjusts the second target interface from the highlighted state to the deemphasized state, which can effectively ensure the accuracy of the interface replacement process, thereby improving the interface operation experience of the host.

Case 6, in some application scenarios (such as multi-person speech, multi-person performance, multi-person competition and other scenario of highlighting multi-person), if the host terminal is displaying the first target interface and at least one other interface in the highlighted state, then after the host terminal receives the trigger operation for the first adjustment control in the gift panel corresponding to the first target interface, the host terminal switches the interface display state of the first target interface from the highlighted state (for example, the state presented by the interface 701 in Figure 7) to the deemphasized state on the first co-hosting page, so that the highlighting for the first target interface can be ended separately on the premise of ensuring that other interfaces are still in the highlighted state.

Based on the relevant content of the cases 1 to 6, it can be seen that for the host terminal used by the host, in the case that the host terminal displays the first co-hosting page and the first co-hosting page displays the first target interface and other interfaces, after the host terminal receives from the host the trigger operation on the first adjustment control in the gifting panel corresponding to the first target interface, the host terminal not only adjusts the interface display state of the first target interface, but also adjusts the interface display state of one or more interfaces other than the first target interface on the first co-hosting page, so that the adjusted first co-hosting page can meet the interface management and control requirements of the host as much as possible, to improve the interface operation experience of the host.

Based on the above description of the interface adjustment process for the first co-hosting page (that is, the relevant content of S3 above), it can be seen that for the host terminal used by the host, in the case that the host terminal displays the first co-hosting page (for example, the pages shown in Figure 1-Figure 4, etc.), after the host receives the trigger operation on the first adjustment control in the gifting panel corresponding to a certain interface (for example, the co-hosting display interface of the first guest participating in the co-hosting), the host terminal can perform interface adjustment process on the first co-hosting page to obtain the first co-hosting page subjected to interface adjustment (for example, the pages as shown in Figures 7-8), so that the first co-hosting page subjected to interface adjustment can meet the interface management and control requirements of the host as much as possible, to improve the interface operation experience of the host.

It should be noted that, the step of "adjusting the interface display state of at least one to-be-adjusted user interface among the multiple candidate user interfaces on the first co-hosting page" will not only adjust the interface display state of at least one to-be-adjusted user interface on the first co-hosting page displayed by the host terminal, but also accordingly adjust the interface display state of the at least one to-be-adjusted user interface on the live streaming co-hosting page displayed by the client terminals used by all viewers other than the host in the co-hosting live streaming room, so that all users in the co-hosting live streaming room can see that the interface display state of the at least one user interface always remains the same.

It should also be noted that for different clients that have the function of displaying the co-hosting live streaming room (for example, the host terminal used by the host, the guest terminal used by a guest participating in the co-hosting and the viewer terminal used by an ordinary viewer, etc.), although each client terminal can display the co-hosting page of the live streaming room, in some application scenarios the live streaming co-hosting pages displayed on different client terminals may be different from each other (for example, the available controls may be different) on the premise that all client terminals always display the same live streaming co-hosting information, in order to meet various viewing needs of users of different client terminals.

Based on the relevant contents of S1 to S3, in the method for displaying co-hosting applied to the host terminal provided by the embodiment of the present disclosure, in the case that the host terminal used by the host displays the first co-hosting page and the first co-hosting page includes multiple candidate user interfaces, after the host terminal receives from the host a trigger operation for the first target interface among the multiple candidate user interfaces, a gift panel is displayed. And the gift panel includes at least one virtual gift and a first adjustment control, so that after the host terminal receives the trigger operation for the first adjustment control, the host terminal adjusts the interface display state of at least one to-be-adjusted user interface among the multiple candidate user interfaces on the first co-hosting page, and the at least one to-be-adjusted user interface includes the first target interface. Hence, the host can control the interface display state of different co-hosting participators on the first co-hosting page. In this way, the host can adjust the interface display state of some co-hosting participators on the first co-hosting page according to interface display requirements under different live streaming scenarios, which is beneficial to improve the display effect of the co-hosting.

In fact, in order to further improve user experience, the embodiment of the present disclosure further provides another possible implementation of S3 above. In this embodiment, when a gift panel is displayed on the first co-hosting page (for example, the page 600 shown in Figure 6), S3 may be embodied as follows: the host terminal adjusts the interface display state of at least one to-be-adjusted user interface among the multiple candidate user interfaces on the first co-hosting page in response to a trigger operation on the first adjustment control in the gift panel, and cancels the display of the gift panel on the first co-hosting page, so that the first co-hosting page (for example, the page 700 shown in Figure 7) can display the adjusted interface display state of the first target interface (for example, in a zoomed-in state, and in a relatively eye-catching position, etc.), and the user of the host terminal can timely know that the state of the adjusted first target interface presented on the first co-hosting page.

In fact, in order to further improve the interface operation experience, some pre-built page templates can be used to adjust the interface. Based on this, the embodiment of the present disclosure provides another possible implementation of S3 above. In this implementation, in the case that the host terminal displays the first co-hosting page (for example, the page 100 shown in Figure 1) and each candidate user interface (for example, the interface 101-interface 104 in Figure 1) displayed on the first co-hosting page is in the standard interface state, S3 may be embodied as follows: the host terminal adjusts the interface display states of these candidate user interfaces according to a layout template to be used, in response to a trigger operation on the first adjustment control in the gift panel corresponding to the first target interface on first co-hosting page, so that the interface display state of the first target interface is different from the interface display states of other candidate user interfaces except the first target interface.

The layout template to be used refers to the page interface layout set in advance for the first co-hosting page; and the first target interface can be prominently displayed in the layout template to be used.

In addition, the embodiment of the present disclosure does not limit the layout template to be used above. For example, when the first co-hosting page prior to the adjustment is displayed in the first interface layout shown in Figure 1 or the second interface layout shown in Figure 2, the layout template to be used may display the interfaces in a fifth interface layout shown in Figure 7. As another example, when the first co-hosting page prior to the adjustment is displayed in the third interface layout shown in Figure 3 or the fourth interface layout shown in Figure 4, the layout template to be used may display the interfaces in a sixth interface layout shown Figure 8.

In addition, the embodiment of the present disclosure does not limit the determination of the layout template to be used, for example, it may be preset. As another example, it can also be personalized by the host via the host terminal.

In addition, in order to further improve the interface display effect, the embodiment of the present disclosure further provides a possible implementation of determining the layout template to be used, which may be embodied as follows: the layout template to be used is determined according to the page layout description information of the first co-hosting page prior to the adjustment. The page layout description information is used to indicate the interface layout state presented on the first co-hosting page prior to the adjustment; and the embodiment of the present disclosure does not limit the page layout description information, for example, it may include style parameters of the interface layout, the number of interfaces, the position of each candidate user interface on the first co-hosting page, and other information. The style parameters of the interface layout are used to indicate the style of the interface layout used by the first co-hosting page.

It should be noted that this embodiment of the present disclosure does not limit the implementation of the step of "determining the layout template to be used according to the page layout description information of the first co-hosting page prior to the adjustment". For example, it may be embodied as follows. A candidate layout template matching with the page layout description information at the highest degree is searched from the pre-built template database and determined as the layout template to be used. There are a large number of candidate layout templates in the template database, and different candidate layout templates are pre-set for first co-hosting pages with different page layout description information.

In addition, in some application scenarios, the host may need to replace the template. Based on this, the embodiment of the present disclosure further provides another possible implementation of the above-mentioned method for displaying co-hosting. In this implementation, after the step of "adjusting the interface display states of these candidate user interfaces according to the layout template to be used", the method also includes the following S4-S6:

S4: the host terminal displays a first page in response to the trigger operation for a first management control on the first co-hosting page.

The first management control is used to manage the co-hosting state of at least one interaction participator in the co-hosting live streaming room; and this embodiment of the present disclosure does not limit the first management control, for example, when the first co-hosting page is the page 800 as shown in Figure 8, the first management control may be a control 802.

In addition, this embodiment of the present disclosure does not limit the "the trigger operation for the first management control on the first co-hosting page", for example, it may be a click operation.

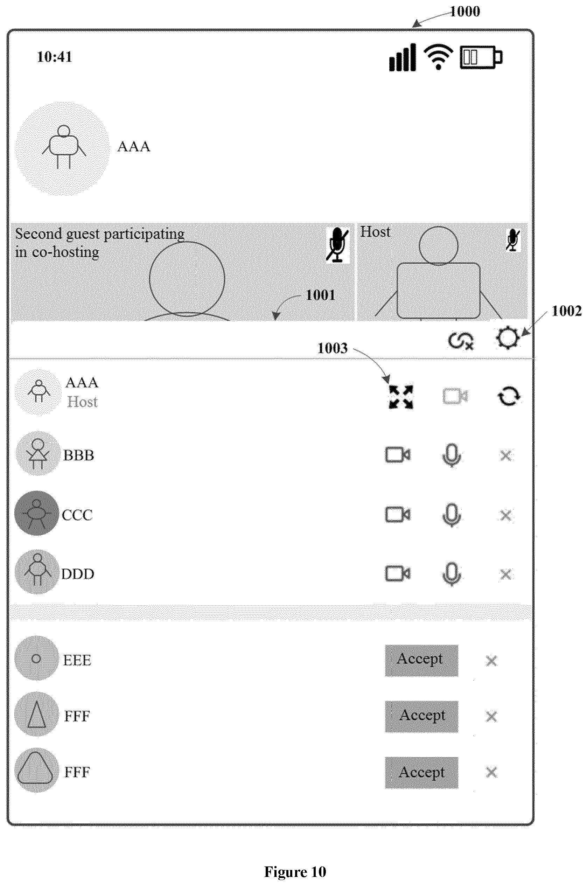

The first page is used to provide the host with the function of managing the interaction state of at least one interaction participator in the co-hosting live streaming room; and this embodiment of the present disclosure does not limit the first page, for example, it can be the page 1001 shown in Figure 10.

In addition, the embodiment of the present disclosure does not limit the display manner of the first page, for example, it may be displayed any related or future page display manner. As another example, in order to further improve the user experience, the first page can be displayed on the first co-hosting page according to a preset display method (for example, the drop-down page as for displaying page 1001 on page 1000 in Figure 10), so that the host can obtain information from both the first co-hosting page and the first page.

Based on the relevant content of S4 above, it can be seen that for the host terminal used by the host, in the case that the host terminal displays the first co-hosting page (for example, the page 800 shown in Figure 8) and the first co-hosting page is displaying the at least one candidate user interface according to the layout template to be used, the host terminal displays the first page once receiving a trigger operation for the first management control in the first co-hosting page. In this way, the host can not only use the first page to adjust the co-hosting display state of these candidate user interfaces, but also can use the first page to replace the layout template to be used with another template, which is beneficial to improve the interface operation experience of the host.

S5: the host terminal displays a second page in response to the trigger operation for a second management control on the first page; at least one candidate template is displayed on the second page.

The second management control is at least used to provide the host with a function of selecting the display template for the "at least one candidate user interface"; and this embodiment of the present disclosure does not limit the second management control, for example, when the first page is the page 1001 as shown in Figure 10, the second management control may be the control 1002 shown in Figure 10

In addition, this embodiment of the present disclosure does not limit the "triggering operation for the second management control on the first page", for example, it may be a click operation.

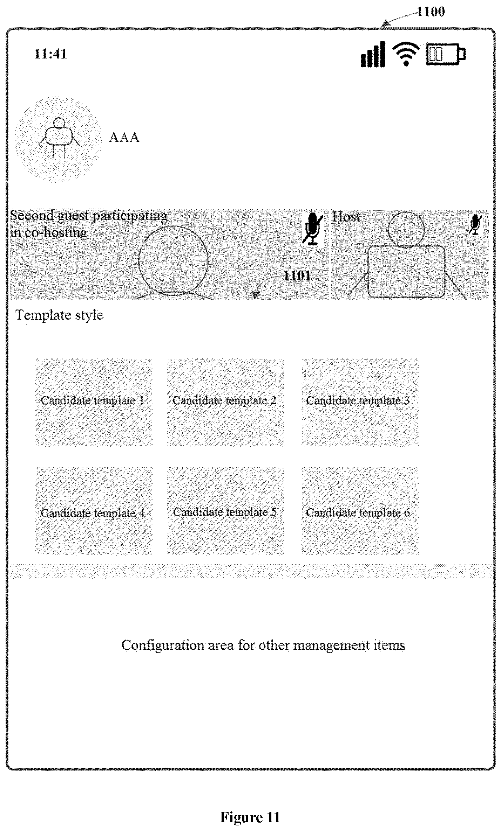

The second page is used to provide the host with a variety of display templates for the "at least one candidate user interface", so that the second page can provide the host with the function of selecting the display template for the "at least one candidate user interface". And the second page can display at least one candidate template (for example, the candidate template 1 to candidate template 6 shown in Figure 11). In this way, the host can select a certain template from the candidate templates as the display template for "at least one candidate user interface".

In addition, this embodiment of the present disclosure does not limit the second page, for example, it may be the page 1101 shown in Figure 11.

In addition, the embodiment of the present disclosure does not limit the display manner of the second page, for example, it may be displayed by using any related or future page display manner. As another example, in order to further improve the user experience, the second page can be displayed on the first co-hosting page according to preset display manner (for example, the manner of drop-down page as for displaying the page 1101 on page 1100 in Figure 11, etc.), so that the host can obtain information from the first co-hosting page and the second page at the same time.

Based on the relevant content of S5 above, it can be seen that for the host terminal used by the host, in the case that the host terminal displays the first co-hosting page (for example, the page 1000 shown in Figure 10) and at least one candidate user interface is being displayed on the first co-hosting page according to the layout template to be used, and the first page is also displayed on the first co-hosting page, after the host receives a trigger operation for the second management control on the first page, the second page is displayed, so that the host can use the at least one candidate template displayed on the second page to adjust the interface display state of the "at least one candidate user interface".

S6: In response to the trigger operation on a target template in the at least one candidate template, the host terminal adjusts, on the first co-hosting page, the interface display states of multiple candidate user interfaces according to the target template. The target template refers to a candidate template selected by the host to replace the layout template to be used.

In the embodiment of the present disclosure, for the host terminal used by the host, in the case that the host terminal displays the first co-hosting page (for example, the page 1100 shown in Figure 11), at least one candidate user interface is displayed on the first co-hosting page according to the layout template to be used, and at least one candidate template is also displayed on the first co-hosting page, after the host terminal receives the trigger operation (for example, a click operation) for the target template in the candidate templates, the host terminal adjusts the interface display states of multiple candidate user interfaces according to the target template on the first co-hosting page, so that the adjusted first co-hosting page can display these candidate user interfaces according to the target template. By doing so, the first co-hosting page meets the interface management and control requirements of the host better.

Based on the relevant content of S4 to S6 above, in some application scenarios, the host terminal used by the host can not only use a template to highlight the co-hosting display interface of some guests participating in the co-hosting, but also use pre-built candidate templates to switch the template to other templates, which can further improve the interface operation experience of host.

In fact, in order to further improve the user experience of the guest participating in the co-hosting in the co-hosting live streaming room, when the host adjusts the interface display state of the interface corresponding to a certain guest participating in the co-hosting, the host terminal used by the host can inform the guest terminal used by the guest participating in the co-hosting of this situation via a message.

Based on the above requirements, the embodiment of the present disclosure further provides another possible implementation of S3 above. In this implementation, when the host terminal displays multiple candidate user interfaces, and the first target interface among the "multiple candidate user interfaces" is used to display the co-hosting display state of a guest participating in the co-hosting (for example, the first, second, or third guest participating in the co-hosting, as shown in Figure 1), S3 may be embodied as follows. In response to the trigger operation for the first adjustment control in the gift panel corresponding to the first target interface, the host terminal adjusts the interface display state of at least one to-be-adjusted user interface among the multiple candidate user interfaces on the first co-hosting page, and sends a third prompt object to the guest terminal corresponding to the first target interface.

The guest terminal corresponding to the first target interface refers to the client terminal used by the guest participating in the co-hosting who is displayed on the first target interface. As an example, in the case of the first target interface is the interface 102 shown in Figure 1, the guest terminal corresponding to the first target interface refers to the client terminal used by the first guest participating in the co-hosting.

The third prompt object is used to describe the change of the interface display state of the first target interface (for example, switching from one state to another state, etc.). It can be seen that the third prompt object is used to display the third prompt information, and the semantic information carried by the third prompt information can express the change of the interface display state of the first target interface.

In addition, this embodiment of the present disclosure does not limit the third prompt object, for example, it may be an instruction or text information.

In addition, the embodiment of the present disclosure does not limit the transmission of the third prompt object, for example, it may be embodied as follows. The host terminal directly sends the third prompt object to the "guest terminal corresponding to the first target interface". As another example, the host terminal first sends the third prompt object to the server, and then the server sends the third prompt object to the "guest terminal corresponding to the first target interface". The server can perform data communication with the host terminal and each guest terminal.

In addition, the embodiment of the present disclosure does not limit the manner of displaying the third prompt object on the guest terminal corresponding to the first target interface, for example, it can be displayed by means of pop-up windows, light prompts, pages or controls. The light prompt (for example, toast, etc.) refers to a kind of light feedback/prompt, so as to prompt the user while not interrupting the operation of the user.

Based on the above four paragraphs, it can be seen that for the host terminal used by the host, in the case that the host terminal displays the first co-hosting page and the first target interface is displayed on the first co-hosting page, after the host terminal receives the trigger operation on the first adjustment control in the gift panel corresponding to the first target interface on the first co-hosting page, if the first target interface is used to display the co-hosting display state of a guest participating in the co-hosting, then the host terminal can not only perform interface adjustment for the first target interface, but also send a third prompt object to the guest terminal corresponding to the first target interface, so that the third prompt object can be displayed on the guest terminal and the user of the guest terminal can be informed from the third prompt object that the corresponding interface has been adjusted.

In fact, in order to further improve the co-hosting experience of the guest participating in the co-hosting, after the host highlights the interface corresponding to a guest participating in the co-hosting, the guest can use the his/her guest terminal to actively cancel the highlighting of its corresponding interface.

For this purpose, the embodiment of the present disclosure further provides another possible implementation of the method for displaying co-hosting. In this implementation, the method for displaying co-hosting may not only include some or all of the above steps, but also include S7 below. S7 is executed after the execution of S3.

S7: If the adjusted first target interface is in the highlighted state, then after a pre-cancellation condition is met, the host terminal adjusts the first target interface from the highlighted state to the standard interface state on the first co-hosting page.

The pre-cancellation condition may be determined in advance, for example, it may be embodied as: triggering a fourth operation on the guest terminal corresponding to the first target interface. The fourth operation is used to request to cancel highlighting display of the first target interface.

It can be seen that the fourth operation refers to an operation triggered on the guest terminal corresponding to the first target interface for the first target interface, which is used for requesting to cancel the highlighting of the first target interface.

In addition, this embodiment of the present disclosure does not limit the fourth operation above. For example, when the guest terminal corresponding to the first target interface displays a co-hosting management page (for example, the page 1200 shown in Figure 12), and a third adjustment control (for example, the control 1201 shown in Figure12) is displayed on the co-hosting management page, the fourth operation may be embodied as: a trigger operation (for example, a click operation) for the third adjustment control.

The co-hosting management page refers to the page displayed on the guest terminal corresponding to the first target interface, and is used to adjust the co-hosting display state of the user of the guest terminal; and the embodiment of the present disclosure does not limit the co-hosting management page, for example, it may be the page 1200 shown in Figure 12.

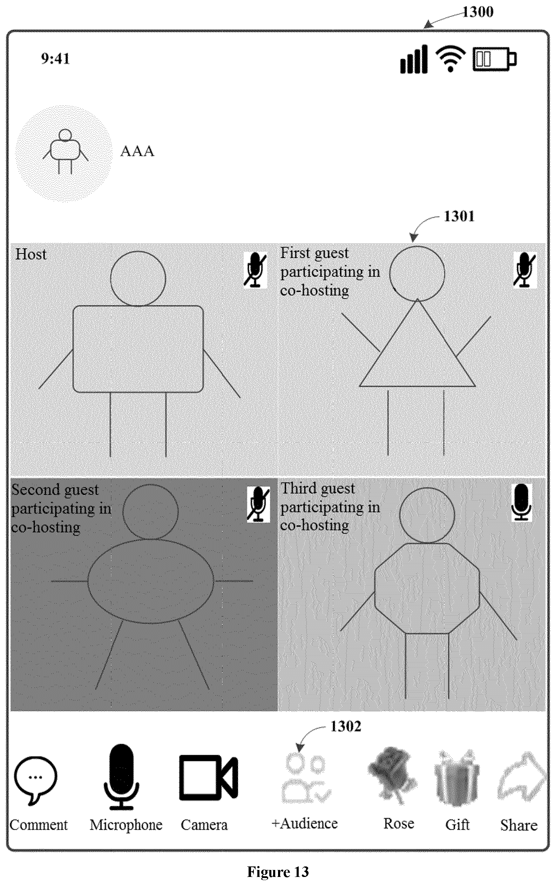

In addition, this embodiment of the present disclosure does not limit the triggering manner of the co-hosting management page, for example, it can be triggered by any related or future method that can trigger the display of the co-hosting management page on the guest terminal corresponding to the first target interface. As another example, when the second co-hosting page 1300 shown in Figure 13 is displayed on the guest terminal corresponding to the first target interface, and the first target interface is used to display the first guest participating in the co-hosting, the triggering of the co-hosting may be embodied as follows: in response to a trigger operation (for example, a click operation) for the interface 1301 (that is, the first target interface) on the second co-hosting page 1300, the guest terminal displays the co-hosting management page (for example, the page 1200 shown in Figure12); or, in response to a trigger operation (for example, a click operation) for the co-hosting management control 1302 on the second co-hosting page 1300, the guest terminal displays the co-hosting management page (for example, the page 1200 shown in Figure 12).

The third adjustment control refers to the control which is deployed on the co-hosting management page displayed by the guest terminal corresponding to the first target interface and is used to trigger the adjustment for the interface display state of the first target interface. In addition, the embodiment of the present disclosure does not limit the third adjustment control, for example, it may be the control 1201 shown in Figure 12. It should be noted that the third adjustment control is similar to the first adjustment control, the detail of which will be omitted here for conciseness.

Based on the relevant content of the third adjustment control above, it can be known that in the case that the first target interface is in the highlighted state, the co-hosting management page (for example, page 1200 shown in Figure 12) is displayed on the guest terminal corresponding to the first target interface, and the third adjustment control (for example, the control 1201 shown in Figure 12) is displayed on the co-hosting state management page, after the guest terminal receives a trigger operation (for example, a click operation) for the third adjustment control, the guest terminal can determine that the user of the guest terminal wants to cancel the highlighting of the first target interface, so the guest terminal can convey this intention to the host terminal (and client terminals used by the viewers in live streaming room) in a preset manner, and the host terminal (and the client terminals used by the viewers in live streaming room) can end the highlighting of the first target interface as desired (that is, the interface display state of the first target interface is switched from the highlighted state to the non-highlighted state). It should be noted that this embodiment of the present disclosure does not limit the above mentioned preset manner, for example, it can be implemented by using any related or future method that can realize information synchronization between two client terminals (for example, the two client terminals can perform data communication directly, or with assistance of a server to forward information, etc.).

In fact, in order to further improve user experience, the embodiment of the present disclosure further provides another possible implementation of the fourth operation. For better understanding, the following description will be made in conjunction with a possible implementation of S7.

In a possible implementation, in the case that the guest terminal corresponding to the first target interface displays a co-hosting management page (for example, the page 1200 shown in Figure 12), and the co-hosting state management page displays the third adjustment control (for example, the control 1201 shown in Figure 12 ), S7 may specifically include steps 21-23.

Step 21: if the adjusted first target interface is in the highlighted state, in the case that the guest terminal corresponding to the first target interface displays a co-hosting management page (for example, the page 1200 shown in Figure 12), the guest terminal displays a fourth prompt object in response to the trigger operation (for example, click operation) of the third adjustment control on the co-hosting management page.

The fourth prompting object is used to confirm with the guest participating in the co-hosting who corresponds to the first target interface whether to cancel the highlighting of the interface. It can be seen that the fourth prompt object is used to display the fourth prompt information, and the fourth prompt information is used to express the semantic information of "confirm whether to cancel the highlighting of the interface ".

In addition, the fourth prompt object is similar to the first prompt object above, the detail of which will be omitted here for conciseness..

Step 22: if the guest terminal corresponding to the first target interface receives the fifth operation (for example, clicking on the confirm button) triggered for the fourth prompt object, then the host terminal adjusts, on the first co-hosting page, the first target interface from the highlighted state to the standard interface state.

Based on the relevant content of steps 21 to 23 above, in a possible implementation, in order to avoid adverse effects caused by accidental touches, the fourth operation may specifically include: first triggering an operation (for example, a click operation) for the third adjustment control to display the fourth prompt object on the co-hosting management page; and then triggering a fifth operation (for example, clicking on a confirm button, etc.) for the fourth prompt object.

Based on this, it can be seen that when the first target interface is in the highlighted state, the guest terminal corresponding to the first target interface displays a co-hosting management page (for example, the page 1200 shown in Figure 12), and the third adjustment control (for example, the control 1201 shown in Figure 12 ) is displayed on the co-hosting state management page, after the guest terminal receives a trigger operation (for example, a click operation) for the third adjustment control, the guest terminal may first display the fourth prompt object, so that the user of the guest terminal can obtain the fourth prompt information from the fourth prompt object; if the guest terminal receives the fifth operation (for example, clicking the confirm button, etc.) for the fourth prompt object , then the guest terminal can determine that the user of the guest terminal wants to cancel the highlighting of the first target interface, so the guest terminal can convey this intention to the host terminal (and client terminals used by the viewers in live streaming room) in a preset manner. In this way, the host terminal (and the client terminals used by the viewers in live streaming room) can end the highlighting of the first target interface as desired (that is, the interface display state of the first target interface is switched from the highlighted state to the non-highlighted state). It should be noted that this embodiment of the present disclosure does not limit the preset manner above, for example, it can be implemented by using any related or future emerging method that can realize information synchronization between two client terminals (for example, the two client terminals can perform data communication directly, or with assistance of a server to forward information, etc.)

Based on the relevant content of S7, for the first co-hosting page used to display the co-hosting live streaming room, on one hand, the host in the co-hosting live streaming room may adjust the first co-hosting page via the host terminal; on the other hand, guest participating in the co-hosting who is in the highlighted state in the co-hosting live streaming room may also cancel the highlighted state of the co-hosting display interface corresponding to the guest . This will not only improve the co-hosting experience of the host, but also improve the co-hosting experience of the guest participating in the co-hosting.

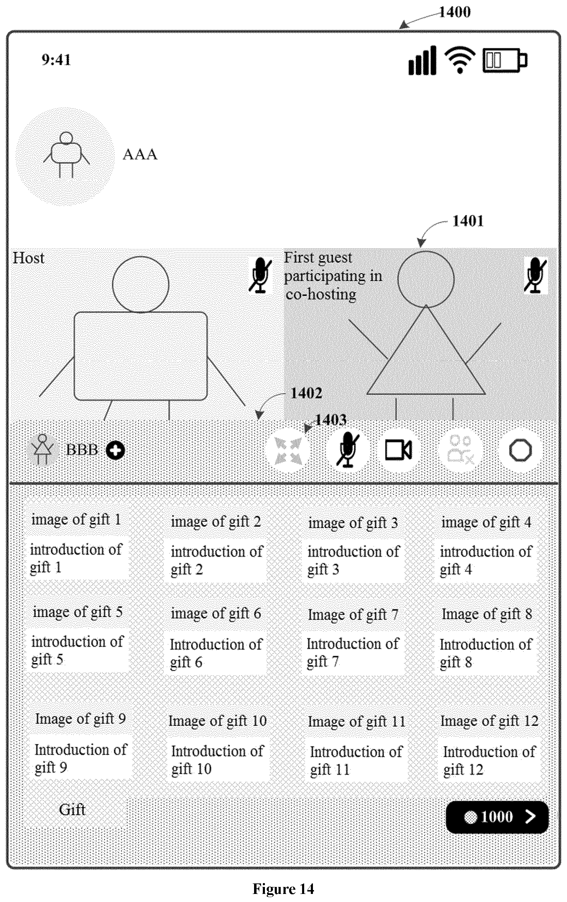

In fact, in some cases, the guest participating in the co-hosting can not only cancel the highlighted state by using the third adjustment control, but also set, by means of the third adjustment control, the co-hosting display interface of the guest participating in the co-hosting to be non-adjustable. Based on this, the embodiment of the present disclosure further provides another possible implementation of the third adjustment control above. In this implementation, in the case that the guest terminal corresponding to the first target interface displays a co-hosting management page (such as , the page 1200 shown in Figure 12) and a third adjustment control (for example, the control 1201 shown in Figure 12 ) is displayed on the co-hosting management page, after receiving the third operation triggered for the third adjustment control, the guest terminal adjusts the first adjustment control in the gift panel (for example, the page 602 in Figure 6) from the first control display state (for example, the state of the zoom-in control 603 in Figure 6) to second control display state (for example, the state of the control 1403 in Figure14).

The third operation refers to an operation triggered for the third adjustment control on the guest terminal corresponding to the first target interface, and is used to configure for the first target interface to no longer accept highlighting adjustment.

In addition, the embodiment of the present disclosure does not limit the third operation above. For example, in the case that the guest terminal corresponding to the first target interface displays a co-hosting management page (for example, the page 1200 shown in Figure 12 ) and a third adjustment control (for example, the control 1201 shown in Figure 12 ) is displayed on the co-hosting state management page, the third operation may be embodied as follows: first, a trigger operation (for example, a click operation) for the third adjustment control is triggered, so that a fourth prompt object is displayed on the co-hosting management page; and then a sixth operation is triggered for the fourth prompt object (for example, checking the option of no longer accepting highlighting adjustment, etc.).

Based on this, it can be seen that in the case that the first target interface is in the highlighted state, the guest terminal corresponding to the first target interface displays a co-hosting management page (for example, the page 1200 shown in Figure 12), and the third adjustment control (for example, the control 1201 shown in Figure 12 ) is displayed on the co-hosting state management page, after the guest terminal receives a trigger operation (for example, a click operation) for the third adjustment control, the guest terminal may first display the fourth prompt object, so that the user of the guest terminal can obtain the fourth prompt information from the fourth prompt object; if the guest terminal receives the sixth operation triggered for the fourth prompt object (for example, checking to not accept highlighting adjustment, etc.), then the guest terminal can determine that the user of the guest terminal wishes to no longer accept the highlighting adjustment for the first target interface, so the guest terminal can convey this intention to the host terminal in a preset manner, and the host terminal can adjust the first adjustment control in the gift panel (for example, the page 602 in Figure 6) from the first control display state to the second control display state as desired. As a result, the host terminal cannot highlight the first target interface ever again.

The "first control display state" is used to indicate that the first adjustment control in the gift panel can be triggered, so that the first control display state can indicate that the co-hosting participator displayed on the first target interface allows the host to highlight her/his interface. For example, the first control display state may be the state presented by the zoom-in control 603 in Figure 6.

The "second control display state" is used to indicate that the first adjustment control in the gift panel cannot be triggered, so that the second control display state can indicate that the co-hosting participator displayed on the first target interface does not allow the host to highlight her/his interface. For example, the second control display state may be the state presented by the control 1403 in Figure 14.

It should be noted that this embodiment of the present disclosure does not limit the implementation of "adjusting the first adjustment control in the gift panel from the first control display state to the second control display state", for example, it can be implemented by using any related or future emerging method that enables the host terminal to adjust the page information according to the operation of the guest terminal.

Based on the relevant content of the first adjustment control above, the embodiment of the present disclosure further provides another possible implementation of the method for displaying co-hosting, which may specifically include step 31-step 35.

Step 31: the host terminal displays the first co-hosting page; the first co-hosting page includes multiple candidate user interfaces.

It should be noted that the relevant content of step 31 may refer to the relevant content of S1.

Step 32: the host terminal displays the gift panel in response to a trigger operation for a first target interface among the multiple candidate user interfaces.

It should be noted that the relevant content of step 32 may refer to the relevant content of S2.

Step 33: if the first adjustment control in the gift panel is in the first control display state, the host terminal adjusts the interface display state of the first target interface on the first co-hosting page, in response to the trigger operation on the first adjustment control.

In the embodiment of the present disclosure, for the host terminal used by the host, when a gift panel (for example, the gifting page 602 shown in Figure 6 ) is displayed on the host terminal, if the first adjustment control in the gift panel is in the first control display state, it can be determined that the co-hosting participator displayed on the first target interface allows the streamer to highlight her/his interface, so the host terminal, once receiving a trigger operation (for example, a click operation) for the first adjustment control in the gift panel, can adjust the interface display state of the first target interface on the first co-hosting page, to change the interface display state of the first target interface. As a result, all the live streaming viewers in the co-hosting live streaming room can see this change.

Step 34: if the first adjustment control in the gift panel is in the second control display state, the host terminal displays the second prompt object in response to the trigger operation for the first adjustment control.

The second prompt object is used to indicate that the interface display state of the first target interface cannot be adjusted. It can be seen that the second prompt object is used to display the second prompt information, and the second prompt information is used to express the semantic information of "the interface display state of the first target interface cannot be adjusted".

In addition, the second prompting object is similar to the third prompting object, the detail of which will be omitted here for conciseness.

In addition, the embodiment of the present disclosure does not limit the determination of the second control display state. For example, it may be embodied as: triggering the second operation on the guest terminal corresponding to the first target interface to determine the second control display state. The second operation is used to adjust the first adjustment control from the first control display state to the second control display state; and this embodiment of the present disclosure does not limit the second operation. For example, when the co-hosting management page is displayed on the guest terminal corresponding to the first target interface, and the co-hosting management page includes the third adjustment control, the second operation may be a third operation triggered for the third adjustment control. It should be noted that the relevant content of the third operation can be referred to the content above.

In addition, this embodiment of the present disclosure does not limit the implementation of the step "displaying the second prompt object", for example, it may be embodied as: displaying the second prompt object on the first co-hosting page.

Based on the relevant content of the step 34, for the host terminal used by the host, when the gift panel (for example, the gifting page 1402 shown in Figure 14) is displayed on the host terminal, if the first adjustment control in the gift panel is in the second control display state, it can be determined that the co-hosting participator displayed on the first target interface (for example, the interface 1401 in Figure 14 ) does not allow the host to highlight his/her interface, so after the host terminal receives the trigger operation (for example, a click operation) for the first adjustment control in the gift panel, the host terminal can display the second prompt object, and the user of the host terminal can know from the second prompt object that the co-hosting participator does not allow the host to highlight his/her interface. Therefore, the user of the host terminal no longer tries to highlight the first target interface, which is beneficial to improve the interface operation experience of the host.

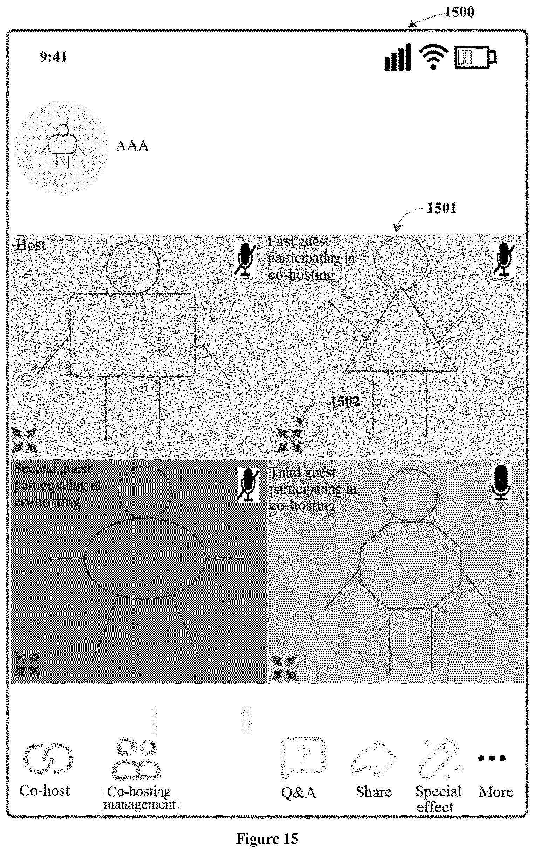

In some application scenarios, in order to further simplify the management and control process, a control (for example, the control 1502 shown in Figure 15) with the function of interface display state adjustment can be deployed on the first target interface displayed on the host terminal, so that the user of the host terminal can use the control to implement the adjustment process for the interface display state of the first target interface.

Based on this, the embodiment of the present disclosure provides a possible implementation of the method for displaying co-hosting. In this embodiment, the method for displaying co-hosting may include step 41 to step 42 below.

Step 41: the host terminal displays the first co-hosting page; the first co-hosting page includes multiple candidate user interfaces.

It should be noted that the relevant content of step 41 can be referred to the relevant content of S1.

Step 42: in response to the trigger operation on the second adjustment control in the first target interface among the multiple candidate user interfaces, the host terminal adjusts the interface display state of at least one to-be-adjusted user interface among the multiple candidate user interfaces on the first co-hosting page.

The second adjustment control refers to the control deployed on the first target interface with the function of interface display state adjustment. For example, when the first co-hosting page is the page 1500 shown in Figure 15 and the first target interface is the interface 1501 shown in Figure 15, the second adjustment control can be the control 1502 shown in Figure 15. It should be noted that the second adjustment control is similar to the first adjustment control, the detail of which will be omitted here for conciseness.

It should be noted that, in order to further improve the interface operation experience of the host, for multiple candidate user interfaces displayed on the first co-hosting page, the control with the function of interface display state adjustment can be deployed on each candidate user interface (for example, as in the distribution of controls shown in Figure 15), so that the host can use these controls to respectively trigger the adjustment process of the interface display state of the corresponding candidate user interfaces.

It should also be noted that the related content of the step of "adjusting the interface display state of at least one to-be-adjusted user interface among the multiple candidate user interfaces on the first co-hosting page" in step 42 can be referred to the relevant content of S3 above.

Based on the relevant content of steps 41 to 42 above, for the host terminal used by the host, in the case that the first co-hosting page (for example, the page 1500 shown in Figure 15) is displayed on the host terminal and the first target interface (for example, the interface 1501 shown in Figure 15) is displayed on the first co-hosting page, after the host terminal receives the trigger operation (for example, a click operation) for the second adjustment control (for example, the control 1502 shown in Figure 15) in the first target interface, the host terminal can adjust the interface display state of at least one to-be-adjusted user interface among the multiple candidate user interfaces on the first co-hosting page, and the at least one to-be-adjusted user interface includes the first target interface, so that the display state of the first target interface (and some other interfaces) on the first co-hosting page can be changed, so as to meet the interface management and control requirements of the host, thereby improving the interface operation experience of the host.

In fact, in order to further improve the interface operation experience of the host, the host can not only adjust the interface display state for the co-hosting display interface of the guest participating in the co-hosting, but also adjust the interface display state of the co-hosting display interface for the host itself (that is, host display interface).

Based on this, the embodiment of the present disclosure further provides a possible implementation of the method for displaying co-hosting. In this embodiment, the method for displaying co-hosting may include the following step 51 to step 52.

Step 51: the host terminal displays the first co-hosting page (for example, the page 100 shown in Figure 1 or the page 200 shown in Figure 2); the first co-hosting page includes multiple candidate user interfaces, and the multiple candidate user interfaces include a host display interface.

It should be noted that the relevant content of step 51 can be referred to the relevant content of S1 above.

Step 52: the host terminal displays the first page (e.g., the page 1001 shown in Figure 10) in response to the trigger operation for the first management control (e.g., the control 105 shown in Figure 1) on the first co-hosting page.

It should be noted that the implementation of step 52 is similar to the implementation of S4 above.

Step 53: in response to a trigger operation (for example, a click operation, etc.) for the fourth adjustment control (for example, the control 1003 shown in Figure 10 ) on the first page, the host terminal adjusts the interface display state of at least one to-be-adjusted user interface among the candidate user interfaces on the first co-hosting page, and the at least one to-be-adjusted user interface includes the host display interface. The fourth adjustment control refers to a control deployed on the first page for adjusting the interface display state of the host display interface. It should be noted that the fourth adjustment control is similar to the first adjustment control, the detail of which will be omitted here for conciseness.

It should be noted that in step 53, the step of "adjusting the interface display state of at least one to-be-adjusted user interface among the multiple candidate user interfaces on the first co-hosting page" in step 53 may be implemented according to any implementation of the step of "adjusting the interface display state of at least one to-be-adjusted user interface among the multiple candidate user interfaces on the first co-hosting page" in the S3. In this case, "first target interface" in the any implementation of the step of "adjusting the interface display state of at least one to-be-adjusted user interface among the multiple candidate user interfaces on the first co-hosting page" in the S3 needs to be replaced by "host display interface".

Based on the relevant content of steps 51 to 53, in some application scenarios, the host can not only adjust the interface display state of the co-hosting display interface of the guest participating in the co-hosting, but also adjust the interface display state of the host's own co-hosting display interface. In this way, the interface operation experience of the host can be further improved.

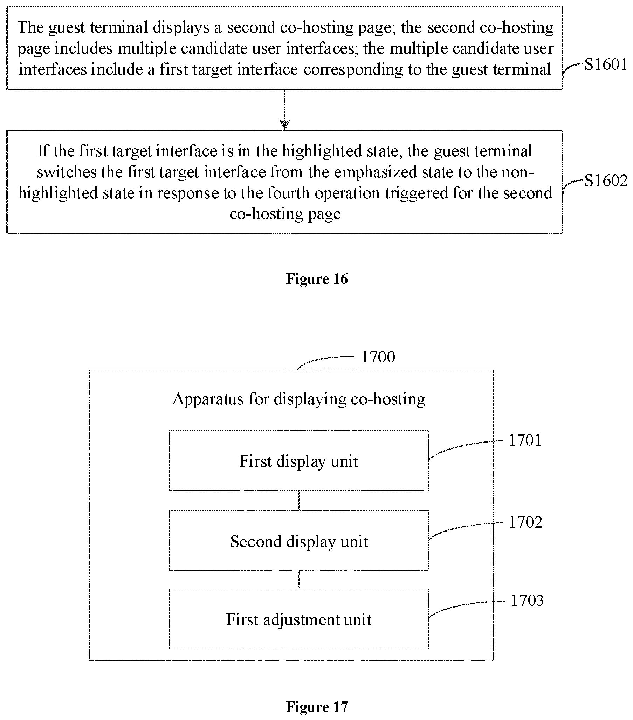

Based on the relevant content of the above-mentioned method for displaying co-hosting applied to the host terminal, the embodiment of the present disclosure further provides a method for displaying co-hosting, which is applied to a guest terminal. For better understanding, illustration will be made in the following in conjunction with Figure 16.

As shown in Figure 16, the embodiment of the present disclosure provides a method for displaying co-hosting which is applied to the guest terminal. The method includes S1601-S1602.

S1601: the guest terminal displays a second co-hosting page; the second co-hosting page includes multiple candidate user interfaces; the multiple candidate user interfaces include a first target interface corresponding to the guest terminal.

The second co-hosting page refers to a live streaming room co-hosting page displayed on the guest terminal (for example, the guest terminal corresponding to the first target interface). For example, the second co-hosting page may be the page 1300 shown in Figure 13.

Based on the relevant content of S1601 above, for the guest terminal used by a certain guest participating in the co-hosting (for example, the first guest participating in the co-hosting ), when the guest terminal displays a second co-hosting, since the interface display state of each candidate user interface displayed on the second co-hosting page is always consistent with that displayed on the host terminal, the interface display state of each candidate user interface displayed on the second co-hosting page can be adjusted along with the adjustment of the interface display state of each candidate user interface displayed on the host terminal.

S1602: if the first target interface is in the highlighted state, the guest terminal switches the first target interface from the highlighted state to the non-highlighted state in response to the fourth operation triggered for the second co-hosting page.

It should be noted that the relevant content of the "fourth operation" in S1602 can be referred to the relevant content of the "fourth operation". For better understanding, a possible implementation of S1602 will be described below.

In a possible implementation, S1602 may specifically include Step 61 to Step 62.

Step 61: if the first target interface is in the highlighted state, the guest terminal displays the co-hosting management page in response to the trigger operation for a to-be-used object in the second co-hosting page.

The to-be-used object is used to trigger the display of the co-hosting management page; and the embodiment of the present disclosure does not limit the to-be-used object, for example, it may be the first target interface (e.g., the interface 1301 in Figure 13) displayed on the second co-hosting page. As another example, it may be the co-hosting management control 1302 (e.g., the control 1302 in Figure 13) displayed on the second co-hosting page.

It can be seen that when the second co-hosting page 1300 as shown in Figure 13 is displayed on the guest terminal corresponding to the first target interface and the first target interface is used to display the first guest participating in the co-hosting, the triggering of the co-hosting management page may be embodied as follows: in response to a trigger operation (for example, a click operation) for the interface 1301 (that is, the first target interface) in the second co-hosting page 1300, the guest terminal displays the co-hosting management page (for example, the page 1200 shown in Figure12); or, in response to a trigger operation (for example, a click operation) on the second co-hosting management control 1302 in the second co-hosting page 1300, the guest terminal displays the co-hosting management page (for example, the page 1200 shown in Figure 12).

Step 62: the guest terminal switches the first target interface from the highlighted state to the non-highlighted state in response to the trigger operation for the third adjustment control on the co-hosting management page.

In the embodiment of the present disclosure, for the guest terminal used by a guest participating in the co-hosting (for example, the first guest participating in the co-hosting), when the guest terminal displays a co-hosting management page (for example, the page 1200 shown in Figure 12), after the guest terminal receives the trigger operation for the third adjustment control (for example, the control 1201 shown in Figure 12) in the co-hosting management page, the guest terminal switches the first target interface corresponding to the guest terminal from the highlighted state to the non-highlighted state, so as to meet the interface management control requirements of the guest participating in the co-hosting for the co-hosting display interface. In this way, the host and the guest participating in the co-hosting can conjointly control the interface display state of the co-hosting display interface of the guest participating in the co-hosting, which is beneficial to improve the user experience.

In fact, in order to further improve the interface operation experience, the embodiment of the present disclosure further provides another possible implementation of step 62, which may specifically include step 621 to step 622 below, or step 621 to step 623 below.

Step 621: the guest terminal displays the fourth prompt object in response to the trigger operation on the third adjustment control on the co-hosting management page.

It should be noted that the relevant content of step 621 can be referred to the relevant content of step 21 above.

Step 622: the guest terminal switches the first target interface from the highlighted state to the non-highlighted state in response to the fifth operation triggered for the fourth prompt object.

In the embodiment of the present disclosure, for the guest terminal used by a guest participating in the co-hosting (for example, the first guest participating in the co-hosting), when the guest terminal displays a co-hosting management page (for example, the page 1200 shown in Figure 12), and a fourth prompt object is displayed on the co-hosting management page, after the guest terminal receives the fifth operation (for example, clicking on the confirm button, etc.) triggered for the fourth prompt object, the guest terminal may switch the first target interface corresponding to the guest terminal from the highlighted state to the non-highlighted state, so as to meet the interface management control requirements of the guest for the co-hosting display interface. In this way, the host and the guest participating in the co-hosting can conjointly control the interface display state of the co-hosting display interface of the guest participating in the co-hosting, which is beneficial to improve the user experience.

Step 623: the guest terminal sends a control state adjustment request to the host terminal in response to a sixth operation triggered for the fourth prompt object.

The control state adjustment request is used to request to switch the first adjustment control corresponding to the first target interface from the first control display state to the second control display state; and this embodiment of the present disclosure does not limit the implementation of the control state adjustment request. For example, it may be implemented by means of instructions or certain control information, and the like.

In the embodiment of the present disclosure, for the guest terminal used by the guest participating in the co-hosting (for example, the first guest participating in the co-hosting), when the guest terminal displays a co-hosting management page (for example, the page 1200 shown in Figure 12), and the fourth prompt object is displayed on the co-hosting management page, after the guest terminal receives the sixth operation triggered for the fourth prompt object (for example, checking on the option of no longer accepting highlighting adjustment, etc.), the guest terminal can determine that the user of the guest terminal no longer wishes to accept the highlighting adjustment for the first target interface, so the guest terminal can send a control state adjustment request to the host terminal. The control state adjustment request can express the intention that the user of the guest terminal no longer wishes to accept the highlighting adjustment for the first target interface. As a result, after the host terminal receives the control state adjustment request, the host terminal can automatically switch the first adjustment control corresponding to the first target interface from the first control display state to the second control display state, which can effectively prevent the host terminal from subsequently performing highlighting adjustment on the first target interface corresponding to the guest terminal.

Based on the relevant content of the step 61 to step 62, it can be seen that for the guest terminal used by a certain guest participating in the co-hosting (for example, the first guest participating in the co-hosting), if the first target interface corresponding to the guest terminal is in the highlighted state, then the guest participating in the co-hosting can not only cancel the highlighting of the first target interface by means of the third adjustment control displayed on the co-hosting management page (for example, the page 1200 shown in Figure 12), but also configure to no longer accept the highlighting adjustment for the first target interface, so that the co-hosting experience of the guest participating in the co-hosting can be further improved.

Based on the relevant content of S1601 to S1602 above, it can be seen that for the guest terminal used by a certain guest participating in the co-hosting (for example, the first guest participating in the co-hosting), if the first target interface corresponding to the guest terminal is in the highlighted state, then the guest terminal can cancel the highlighting of the first target interface by means of its corresponding co-hosting management page and configure to no longer accept the highlighting adjustment for the first target interface, so that the co-hosting experience of the guest participating in the co-hosting can be further improved.

In addition, in order to further improve the co-hosting experience of the guests participating in the co-hosting, the embodiment of the present disclosure further provides another possible implementation of the method for displaying co-hosting, which is applied to the guest terminal. The method may specifically include steps 71-72.

Step 71: the guest terminal displays a second co-hosting page; the second co-hosting page includes multiple candidate user interfaces; the multiple candidate user interfaces include the first target interface corresponding to the guest terminal.

It should be noted that the relevant content of step 71 can be referred to the S1601.

Step 72: after the guest terminal receives the third prompt object from the host terminal, the guest terminal displays the third prompt object; the third prompt object is used to describe the change of the interface display state of the first target interface corresponding to the guest terminal.

For the guest terminal used by a certain guest participating in the co-hosting (for example, the first guest participating in the co-hosting), if the guest terminal displays the second co-hosting page, then the interface display states of multiple candidate user interfaces displayed on the second co-hosting page will be adjusted along with the adjustment performed by the host terminal on the interface display states of multiple candidate user interfaces. And, after the guest terminal receives the third prompt object from the host terminal, the guest terminal will also display the third prompt object, so that the guest participating in the co-hosting can know, from the third prompt object, the change of the interface display state of the first target interface corresponding to the guest terminal, which is beneficial to improve the co-hosting experience of guest participating in the co-hosting.

Based on the method for displaying co-hosting applied to the host terminal provided by the embodiment of the present disclosure, the embodiment of the present disclosure further provides an apparatus for displaying co-hosting, which will be explained and described below with reference to Figure 17. Figure 17 is a schematic structural diagram of an apparatus for displaying co-hosting provided by an embodiment of the present disclosure. It should be noted that the technical details of the apparatus for displaying co-hosting provided by the embodiment of the present disclosure can be referred to the relevant content of the method for displaying co-hosting applied to the host terminal above.

As shown in Figure 17, the apparatus 1700 for displaying co-hosting provided by the embodiment of the present disclosure includes:
a first display unit 1701, configured to display a first co-hosting page; the first co-hosting page including multiple candidate user interfaces;
a second display unit 1702, configured to display a gift panel in response to a trigger operation for a first target interface among the multiple candidate user interfaces; the gift panel including at least one virtual gift and a first adjustment control; and
a first adjustment unit 1703, configured to adjust an interface display state of at least one to-be-adjusted user interface among the multiple candidate user interfaces on the first co-hosting page in response to a trigger operation for the first adjustment control in the gift panel; the at least one to-be-adjusted user interface including the first target interface.

According to a possible embodiment, the at least one to-be-adjusted user interface further includes a second target interface.

The first adjustment unit 1703 is specifically configured for: if the first target interface is in a deemphasized state and the second target interface is in a highlighted state, adjusting the interface display state of the first target interface from the deemphasized state to the highlighted state, and adjusting the second target interface from the highlighted state to the deemphasized state.

According to a possible embodiment, if there are more than one candidate user interface in the highlighted state among the multiple candidate user interfaces, the second target interface is selected from the candidate user interfaces in the highlighted state according to predetermined selection condition.

According to a possible embodiment, the first adjustment unit 1703 includes:
a first display subunit, configured to display a first prompt object in response to the trigger operation for the first adjustment control in the gift panel; and
a second display subunit, configured to, in response to a first operation triggered for the first prompt object, adjust the interface display state of the first target interface from the deemphasized state to the highlighted state and adjust the second target interface from the highlighted state to the deemphasized state.

According to a possible embodiment, the first adjustment unit 1703 is specifically configured to: if each of the candidate user interfaces is in a standard interface state, adjust the interface display states of the multiple candidate user interfaces on the first co-hosting page according to a layout template to be used, so that the interface display state of the first target interface is different from the interface display states of other interfaces except the first target interface among the multiple candidate user interfaces.

According to a possible embodiment, the layout template to be used is determined according to page layout description information of the first co-hosting page.

According to a possible embodiment, the apparatus 1700 for displaying co-hosting further includes:
a fourth display unit, configured to, after adjusting the interface display states of the multiple candidate user interfaces according to the layout template to be used, display a first page in response to a trigger operation for a first management control in the first co-hosting page;
a fifth display unit, configured to display a second page in response to a trigger operation for a second management control in the first page, wherein at least one candidate template is displayed on the second page; and
a third adjusting unit, configured to adjust, in response to a trigger operation for a target template in the at least one candidate template, the interface display states of the multiple candidate user interfaces on the first co-hosting according to the target template.

According to a possible embodiment, the second display unit 1702 is specifically configured to: display the gift panel on the first co-hosting page.

The first adjustment unit 1703 is specifically configured to: in response to the trigger operation for the first adjustment control in the gift panel, adjust the interface display state of at least one to-be-adjusted user interface among the multiple candidate user interfaces on the first co-hosting page, and cancel the display of the gift panel on the first co-hosting page.

According to a possible embodiment, the first adjustment unit 1703 is specifically configured to: if the first adjustment control is in a first control display state, in response to the trigger operation for the first adjustment control in the gift panel, adjust the interface display state of at least one to-be-adjusted user interface among the multiple candidate user interfaces on the first co-hosting page.

The apparatus 1700 for displaying co-hosting further includes:
a fourth adjustment unit, configured to, if the first adjustment control is in a second control display state, display a second prompt object in response to the trigger operation for the first adjustment control in the gift panel; where the second prompt object is used to indicate that the adjustment for the interface display state of the first target interface is rejected.

According to a possible embodiment, the second control display state is determined according to a second operation triggered on a guest terminal corresponding to the first target interface; the second operation is used to adjust the first adjustment control from the first control display state to the second control display state.

According to a possible embodiment, when a co-hosting management page is displayed on the guest terminal corresponding to the first target interface and the co-hosting management page includes a third adjustment control, the second operation includes a third operation triggered for the third adjustment control.

According to a possible embodiment, the apparatus 1700 for displaying co-hosting further includes:
a fifth adjustment unit, configured to, after adjusting the interface display state of at least one to-be-adjusted user interface among the multiple candidate user interfaces on the first co-hosting page, if the adjusted first target interface is in the highlighted state, adjust the first target interface from the highlighted state to the standard interface state on the first co-hosting page once a pre-cancellation condition is met.

According to a possible embodiment, the pre-cancellation condition is to trigger a fourth operation on the guest terminal corresponding to the first target interface; wherein the fourth operation is used for requesting to cancel highlighting display of the first target interface.

According to a possible embodiment, when the co-hosting management page is displayed on the guest terminal corresponding to the first target interface, and the co-hosting management page includes a third adjustment control, the fourth operation includes a trigger operation for the third adjustment control.

According to a possible embodiment, the first adjustment unit 1703 is specifically configured to: in response to the trigger operation for the first adjustment control in the gift panel, adjust the interface display state of at least one to-be-adjusted user interface among the multiple candidate user interfaces on the first co-hosting page, and send a third prompt object to the guest terminal corresponding to the first target interface; where the third prompt object is used for describing a change of the interface display state of the first target interface.

According to a possible embodiment, a second adjustment control is displayed on the first target interface, and
the apparatus 1700 for displaying co-hosting further includes:
a sixth adjustment unit, configured to, after displaying the first co-hosting page, adjust the interface display state of at least one to-be-adjusted user interface from the candidate user interfaces on the first co-hosting page, in response to the trigger operation for the second adjustment control in the first target interface.

Based on the relevant content of the apparatus 1700 for displaying co-hosting, it can be known that for the apparatus 1700 for displaying co-hosting provided in the embodiment of the present disclosure, when the apparatus 1700 for displaying co-hosting displays the first co-hosting page, and the first co-hosting page includes multiple candidate user interfaces, after receiving from the host a trigger operation for the first target interface among the candidate user interfaces, the apparatus 1700 displays a gift panel, and the gift panel includes at least one virtual gift and the first adjustment control. In this way, after the host terminal receives the trigger operation for the first adjustment control, the host terminal adjusts the interface display state of at least one to-be-adjusted user interface among the multiple candidate user interfaces on the first co-hosting page, and the at least one to-be-adjusted user interface includes the first target interface. By doing so, the host can control the interface display state of different co-hosting participators on the first co-hosting page, so that the host can adjust the interface display state of some co-hosting participators in the first co-hosting page according to the interface display requirements in different live streaming scenarios, thereby improving the display effect of the co-hosting.

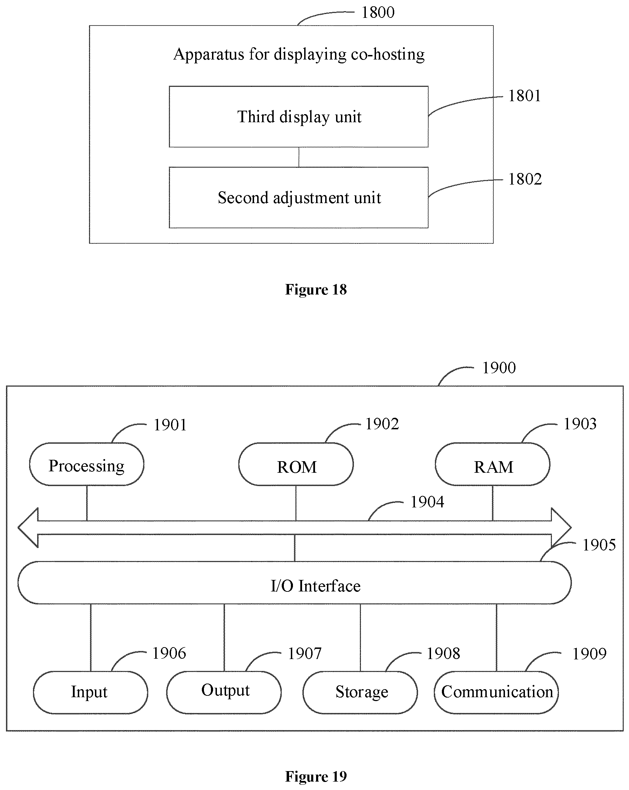

Based on the method for displaying co-hosting applied to the guest terminal provided by the embodiment of the present disclosure, another apparatus for displaying co-hosting is provided in the embodiment of the present disclosure, which will be explained and described below with reference to Figure 18. Figure18 is a schematic structural diagram of another apparatus for displaying co-hosting provided in the embodiment of the present disclosure. It should be noted that the technical details of the apparatus for displaying co-hosting provided in the embodiment of the present disclosure can be referred to the relevant content of the method for displaying co-hosting applied to the guest terminal above.

As shown in Figure 18, the apparatus 1800 for displaying co-hosting provided in the embodiment of the present disclosure includes:
a third display unit 1801, configured to display a second co-hosting page; where the second co-hosting page includes multiple candidate user interfaces, and the multiple candidate user interfaces include a first target interface corresponding to a guest terminal; and
a second adjustment unit 1802, configured to, if the first target interface is in the highlighted state, switch the first target interface from a highlighted state to a non-highlighted state in response to a fourth operation triggered for the second co-hosting page.

According to a possible embodiment, the second adjustment unit 1802 includes:
a third display subunit, configured to display a co-hosting management page in response to a trigger operation for an to-be-used object in the second co-hosting page, where the co-hosting management includes a third adjustment control; and
a first adjustment subunit, configured to switch the first target interface from the highlighted state to the non-highlighted state in response to a trigger operation for the third adjustment control in the co-hosting management page.

According to a possible embodiment, the first adjustment subunit includes:
a fourth display subunit, configured to display a fourth prompt object in response to the trigger operation for the third adjustment control in the co-hosting management page; and
a second adjustment subunit, configured to switch the first target interface from the highlighted state to the non-highlighted state in response to a fifth operation triggered for the fourth prompt object.

According to a possible embodiment, the apparatus 1800 for displaying co-hosting further includes:
a request sending unit, configured to send a control state adjustment request to a host terminal in response to a sixth operation triggered for the fourth prompt object; where the control state adjustment request is used for requesting to switch a first adjustment control corresponding to the first target interface from a first control display state to a second control display state.

According to a possible embodiment, the apparatus 1800 for displaying co-hosting further includes:
a sixth display unit, configured to display the third prompt object after receiving the third prompt object from the host terminal; where the third prompt object is used for describing a change of the interface display state of the first target interface.

Based on the relevant content of the apparatus 1800 for displaying co-hosting above, it can be known that for the apparatus 1800 provided in the embodiment of the present disclosure, if the first target interface is in the highlighted state, the apparatus 1800 can cancel the highlighting of the first target interface and configure to no longer accept the highlighting adjustment for the first target interface by using the co-hosting management page corresponding to the first target interface, so that the co-hosting experience of the guest participating in the co-hosting can be further improved.

In addition, the embodiment of the present disclosure further provides an electronic device. The electronic device includes a processor and a memory; the memory is configured to storing instructions or computer programs; the processor is configured to execute the instructions or computer programs in the memory, so that the electronic device implements the method for displaying co-hosting according to any one of the embodiments provided by the present disclosure.

Figure 19 shows a schematic structural diagram of an electronic device 1900, which is applicable for implementing an embodiment of the present disclosure. The terminal devices in the embodiments of the present disclosure may include, but are not limited to: mobile phones, notebook computers, digital broadcast receivers, PDA (personal digital assistants), PAD (tablet computers), PMP (portable multimedia players), vehicle-mounted terminals (such as vehicle-mounted navigation terminals) and other mobile terminals, and fixed terminals such as digital TVs, desktop computers, and the like. The electronic device shown in Figure 19 is merely an example and should not limit the functions and application scope of the embodiments of the present disclosure.

As shown in Figure 19, the electronic device 1900 may include a processing apparatus (such as a central processing unit, a graphics processing unit, etc.) 1901, which may execute various appropriate actions and processes based on programs stored in a read only memory (ROM) 1902 or programs loaded from storage apparatus 1908 to the random access memory (RAM) 1903. In the RAM 1903, various programs and data necessary for the operation of the electronic device 1900 are also stored. The processing apparatus 1901, ROM 1902, and RAM 1903 are connected to each other through a bus 1904. An input/output (I/O) interface 1905 is also connected to bus 1904.

Typically, the following devices can be connected to the I/O interface 1905: an input apparatus 1906 including, for example, a touch screen, touchpad, keyboard, mouse, camera, microphone, accelerometer, gyroscope, etc.; an output apparatus 1907, including, for example, a liquid crystal display (LCD), speaker, vibrator; a storage apparatus 1908 including, for example, a magnetic tape, a hard disk, etc.; and a communication apparatus 1909. The communication apparatus 1909 may allow the electronic device 1900 to perform wireless or wired communication with other devices to exchange data. Although Figure 19 shows electronic device 1900 having various means, it should be understood that it is unnecessary to implement or have all of the means shown here. More or fewer means may alternatively be implemented or provided.

In particular, according to an embodiment of the present disclosure, the processes described with reference to the flowcharts can be implemented as computer software programs. For example, embodiments of the present disclosure include a computer program product, which includes a computer program carried on a non-transitory computer readable medium, where the computer program includes program code for executing the method shown in the flowchart. In such an embodiment, the computer program may be downloaded and installed from a network via communication apparatus 1909, or from storage apparatus 1908, or from ROM 1902. When the computer program is executed by the processing apparatus 1901, the above-mentioned functions defined in the methods of the embodiments of the present disclosure are implemented.

The electronic device provided by the embodiment of the present disclosure pertains to the same inventive concept as the method provided by the above embodiment. And the technical details that do not described in detail in this embodiment can be referred to the above embodiment, and this embodiment has the same beneficial effect as the above embodiments.

The embodiment of the present disclosure further provides a computer readable medium, the computer readable medium stores instructions or computer programs, and when the instructions or computer programs are run on the device, the device executes the embodiment of the present disclosure. Any implementation of the provided co-hosting display method.

It should be noted that the above-mentioned computer readable medium in the present disclosure may be a computer readable signal medium or a computer readable storage medium or any combination of the above two. A computer readable storage medium may be, for example, but not limited to, an electrical, magnetic, optical, electromagnetic, infrared, or semiconductor system, apparatus, or device, or any combination thereof. More specific examples of computer readable storage media may include, but are not limited to, electrical connections with one or more wires, portable computer disks, hard disks, random access memory (RAM), read only memory (ROM), erasable programmable read only memory (EPROM or flash memory), optical fiber, portable compact disk read only memory (CD-ROM), optical storage device, magnetic storage device, or any suitable combination of the above. In the present disclosure, a computer readable storage medium may be any tangible medium that contains or stores a program that can be used by or in conjunction with an instruction execution system, apparatus, or device. In the present disclosure, however, a computer readable signal medium may include a data signal propagated in baseband or as part of a carrier wave carrying computer readable program code therein. Such propagated data signals may take many forms, including but not limited to electromagnetic signals, optical signals, or any suitable combination of the foregoing. A computer readable signal medium may also be any computer readable medium other than a computer readable storage medium, which can transmit, propagate, or transmit a program for use by or in conjunction with an instruction execution system, apparatus, or device. Program code embodied on a computer readable medium may be transmitted by any appropriate medium, including but not limited to wires, optical cables, RF (radio frequency) and so on, or any suitable combination of the above.

In some embodiments, the client terminal and the server can communicate using any currently known or future-developed network protocols such as HTTP (Hyper Text Transfer Protocol), and can communicate with any form or medium of digital data communication (e.g., communication network) interconnections. Examples of communication networks include local area networks ("LANs"), wide area networks ("WANs"), internetworks (e.g., the Internet), and peer-to-peer networks (e.g., ad hoc peer-to-peer networks), as well as any currently known or future-developed network.

The above-mentioned computer readable medium may be included in the above-mentioned electronic device, or may exist independently without being incorporated into the electronic device.

The above-mentioned computer readable medium carries one or more programs, and when the above-mentioned one or more programs are executed by the electronic device, the electronic device can implement the above-mentioned method.

Computer program code for carrying out operations of the present disclosure may be written in one or more programming languages, or combinations thereof, including but not limited to object-oriented programming languages, such as Java, Smalltalk, C++, and Including conventional procedural programming languages, such as the "C" language or similar programming languages. The program code may execute entirely on the user's computer, partly on the user's computer, as a stand-alone software package, partly on the user's computer and partly on a remote computer or entirely on the remote computer or server. In cases involving a remote computer, the remote computer can be connected to the user computer through any kind of network, including a local area network (LAN) or a wide area network (WAN), or it can be connected to an external computer (such as connected by Internet via an Internet service provider).

The flowchart and block diagrams in the Figures illustrate the architecture, function, and operation of possible implementations of systems, methods and computer program products according to various embodiments of the present disclosure. In this regard, each block in a flowchart or block diagram may represent a module, program segment, or portion of code that contains one or more logical functions for implementing specified executable instructions. It should also be noted that, in some alternative implementations, the functions noted in the block may occur out of the order noted in the figures. For example, two blocks shown in succession may, in fact, be executed substantially concurrently, or they may sometimes be executed in the reverse order, depending upon the functionality involved. It should also be noted that each block of the block diagrams and/or flowchart illustrations, and combinations of blocks in the block diagrams and/or flowchart illustrations, can be implemented by a dedicated hardware-based system that performs the specified functions or operations, or may be implemented by a combination of dedicated hardware and computer instructions.

The units involved in the embodiments described in the present disclosure may be implemented by software or by hardware. The name of the unit/module does not constitute a limitation of the unit itself under certain circumstances.

The functions described herein may be performed at least in part by one or more hardware logic components. For example, without limitation, exemplary types of hardware logic components that may be used can include field programmable gate array (FPGA), application specific integrated circuit (ASIC), application specific standard product (ASSP), system on chip (SOC), complex programmable logical device (CPLD) and so on.

In the context of the present disclosure, a machine readable medium may be a tangible medium that may contain or store a program for use by or in conjunction with an instruction execution system, apparatus, or device. A machine readable medium may be a machine readable signal medium or a machine readable storage medium. A machine readable medium may include, but is not limited to, electronic, magnetic, optical, electromagnetic, infrared, or semiconductor systems, apparatus, or devices, or any suitable combination of the foregoing. More specific examples of machine readable storage media would include one or more wire-based electrical connections, portable computer disks, hard disks, random access memory (RAM), read only memory (ROM), erasable programmable read only memory (EPROM or flash memory), fiber optics, compact disk read only memory (CD-ROM), optical storage devices, magnetic storage devices, or any suitable combination of the foregoing.

It should be noted that each embodiment in this specification is described in a progressive manner, each embodiment focuses on the differences from other embodiments, and the same and similar parts of each embodiment can be referred to each other. As for the system or device disclosed in the embodiment, since it corresponds to the method disclosed in the embodiment, the description is relatively simple and can be referred to the description of the method part for relevant details.

It should be understood that in the present disclosure, the term "at least one" refers to a quantity equal to one or more, and the term "multiple" refers to a quantity equal to two or more. The term "and/or" are used to describe an association relationship between objects, and indicates three possible relationships. For example, "A and/or B" may indicate a case that there is only A, a case that there is only B, and a case that there are both A and B. In each case, a quantity of A may be one or more, and a quantity of B may be one or more. The symbol "/" generally indicates that a former object and a latter object are associated by an "or" relationship. The term "at least one of" or a similar expression refers to "any combination of", including any combination consisting of a single item or multiple items. For example, a statement "at least one of a, b, or c" may indicate a case of "only a", a case of "only b", a case of "only c", a case of "a and b", a case of "a and c", a case of "b and c", or a case of "both a, b and c", where a, b, and c may be single or multiple.

It should also be noted that, in this disclosure, relational terms such as first and second and the like are only used to distinguish one entity or operation from another entity or operation, and do not necessarily require or imply that there are actual relationship or order between these entities or operations. Furthermore, the term "comprise(s)", "include(s)" or any other variation thereof is intended to cover a non-exclusive inclusion such that a process, method, article or apparatus including a set of elements includes not only those elements, but also includes elements not expressly listed, or also includes elements inherent in such a process, method, article, or device. Without further limitations, an element defined by the phrase "comprising/including a..., comprise(s)/include(s) a..." does not exclude the presence of additional identical elements in the process, method, article or apparatus including said element.

The steps of the methods or algorithms described in connection with the embodiments disclosed herein may be directly implemented by hardware, software modules executed by a processor, or a combination of both. Software modules can be placed in random access memory (RAM), internal memory, read-only memory (ROM), electrically programmable ROM, electrically erasable programmable ROM, registers, hard disk, removable disk, CD-ROM, or storage medium in any other manners known in the technical field.

The above description of the disclosed embodiments is provided to enable any the skilled in the art to make or use the present disclosure. Various modifications to these embodiments will be readily apparent to those skilled in the art, and the general principles defined herein may be implemented in other embodiments without departing from the spirit or scope of the application. Therefore, the present disclosure will not be limited to the embodiments shown herein, but is to be accorded the widest scope consistent with the principles and novel features disclosed herein.

## Claims

1. A method for displaying co-hosting, wherein the method is applied to a host terminal, and the method comprises:
displaying a first co-hosting page, wherein the first co-hosting page comprises a plurality of candidate user interfaces;
in response to a trigger operation for a first target interface among the plurality of candidate user interfaces, displaying a gift panel; wherein the gift panel comprises at least one virtual gift and a first adjustment control; and
in response to a trigger operation for the first adjustment control in the gift panel, adjusting, on the first co-hosting page, an interface display state of at least one to-be-adjusted user interface among the plurality of candidate user interfaces, wherein the at least one to-be-adjusted user interface comprises the first target interface.

2. The method according to claim 1, wherein the at least one to-be-adjusted user interface further comprises a second target interface; and
the adjusting an interface display state of at least one to-be-adjusted user interface among the plurality of candidate user interfaces on the first co-hosting page, comprises:
if the first target interface is in a deemphasized state and the second target interface is in a highlighted state, adjusting the interface display state of the first target interface from the deemphasized state to the highlighted state, and adjusting the second target interface from the highlighted state to the deemphasized state.

3. The method according to claim 2, wherein if there are multiple candidate user interfaces in the highlighted state among the plurality of candidate user interfaces, the second target interface is selected from the multiple candidate user interfaces in the highlighted state according to a predetermined selection condition.

4. The method according to claim 2, wherein the in response to a trigger operation for the first adjustment control in the gift panel, adjusting, on the first co-hosting page, an interface display state of at least one to-be-adjusted user interface among the plurality of candidate user interfaces comprises:
displaying a first prompt object in response to the trigger operation for the first adjustment control in the gift panel;
in response to a first operation triggered for the first prompt object, adjusting the interface display state of the first target interface from the deemphasized state to the highlighted state and adjusting the second target interface from the highlighted state to the deemphasized state.

5. The method according to claim 1, wherein the adjusting an interface display state of at least one to-be-adjusted user interface among the plurality of candidate user interfaces on the first co-hosting page, comprises:
if each of the candidate user interfaces is in a standard interface state, adjusting the interface display states of the plurality of candidate user interfaces on the first co-hosting page according to a layout template to be used, so that the interface display state of the first target interface is different from the interface display states of other interfaces except the first target interface among the plurality of candidate user interfaces.

6. The method according to claim 5, wherein the layout template to be used is determined according to page layout description information of the first co-hosting page.

7. The method according to claim 5, wherein after adjusting the interface display states of the plurality of candidate user interfaces according to the layout template to be used, the method further comprises:
displaying a first page in response to a trigger operation for a first management control in the first co-hosting page;
displaying a second page in response to a trigger operation for a second management control in the first page, wherein at least one candidate template is displayed on the second page; and
in response to a trigger operation for a target template in the at least one candidate template, adjusting the interface display states of the plurality of candidate user interfaces on the first co-hosting according to the target template.

8. The method according to claim 1, wherein the displaying the gift panel comprises:
displaying the gift panel on the first co-hosting page;
in response to the trigger operation for the first adjustment control in the gift panel, adjusting the interface display state of at least one to-be-adjusted user interface among the plurality of candidate user interfaces on the first co-hosting page, comprises:
in response to the trigger operation for the first adjustment control in the gift panel, adjusting the interface display state of the at least one to-be-adjusted user interface among the plurality of candidate user interfaces on the first co-hosting page, and cancelling the display of the gift panel on the first co-hosting page.

9. The method according to claim 1, wherein in response to the trigger operation for the first adjustment control in the gift panel, adjusting the interface display state of at least one to-be-adjusted user interface among the plurality of candidate user interfaces on the first co-hosting page, comprises:
if the first adjustment control is in a first control display state, adjusting the interface display state of the at least one to-be-adjusted user interface among the plurality of candidate user interfaces on the first co-hosting page in response to the trigger operation for the first adjustment control in the gift panel; and
the method further comprises:
if the first adjustment control is in a second control display state, displaying a second prompt object in response to the trigger operation for the first adjustment control in the gift panel, wherein the second prompt object is configured to indicate that adjustment for the interface display state of the first target interface is restricted.

10. The method according to claim 9, wherein the second control display state is determined according to a second operation triggered on a guest terminal corresponding to the first target interface; and the second operation is used to adjust the first adjustment control from the first control display state to the second control display state.

11. The method according to claim 10, wherein in a case that a co-hosting management page is displayed on the guest terminal corresponding to the first target interface and the co-hosting management page comprises a third adjustment control, the second operation comprises a third operation triggered for the third adjustment control.

12. The method according to claim 1, wherein after adjusting the interface display state of at least one to-be-adjusted user interface among the plurality of candidate user interfaces on the first co-hosting page, the method further comprises:
if the adjusted first target interface is in a highlighted state, then once a pre-cancellation condition is met, adjusting the first target interface from the highlighted state to a standard interface state on the first co-hosting page.

13. The method according to claim 12, wherein the pre-cancellation condition is to trigger a fourth operation on a guest terminal corresponding to the first target interface; and the fourth operation is used for requesting to cancel highlighting display of the first target interface.

14. The method according to claim 13, wherein in a case that a co-hosting management page is displayed on the guest terminal corresponding to the first target interface and the co-hosting management page comprises a third adjustment control, the fourth operation comprises a trigger operation for the third adjustment control.

15. The method according to claim 1, wherein in response to a trigger operation for the first adjustment control in the gift panel, adjusting an interface display state of at least one to-be-adjusted user interface among the plurality of candidate user interfaces on the first co-hosting page, comprises:
in response to the trigger operation for the first adjustment control in the gift panel, adjusting the interface display state of the at least one to-be-adjusted user interface among the plurality of candidate user interfaces on the first co-hosting page, and sending a third prompt object to a guest terminal corresponding to the first target interface; wherein the third prompt object is used for describing a change of the interface display state of the first target interface.

16. The method according to claim 1, wherein a second adjustment control is displayed on the first target interface;
after the displaying the first co-hosting page, the method further comprises:
in response to a trigger operation for the second adjustment control in the first target interface, adjusting the interface display state of the at least one to-be-adjusted user interface among the plurality of candidate user interfaces on the first co-hosting page.

17. A method for displaying co-hosting, wherein the method is applied to a guest terminal, and the method comprises:
displaying a second co-hosting page, wherein the second co-hosting page comprises a plurality of candidate user interfaces, and the plurality of candidate user interfaces comprise a first target interface corresponding to the guest terminal;
if the first target interface is in a highlighted state, switching the first target interface from the highlighted state to a non-highlighted state in response to a fourth operation triggered for the second co-hosting page.

18. The method according to claim 17, wherein the switching the first target interface from the highlighted state to a non-highlighted state in response to the fourth operation triggered for the second co-hosting page, comprises:
displaying a co-hosting management page in response to a trigger operation for an to-be-used object in the second co-hosting page, wherein the co-hosting management comprises a third adjustment control; and
in response to a trigger operation for the third adjustment control in the co-hosting management page, switching the first target interface from the highlighted state to the non-highlighted state.

19. The method according to claim 18, wherein the switching the first target interface from the highlighted state to the non-highlighted state in response to the trigger operation for the third adjustment control in the co-hosting management page comprises:
displaying a fourth prompt object in response to the trigger operation for the third adjustment control in the co-hosting management page; and
in response to a fifth operation triggered for the fourth prompt object, switching the first target interface from the highlighted state to the non-highlighted state.

20. The method of claim 19, further comprising:
in response to a sixth operation triggered for the fourth prompt object, sending a control state adjustment request to a host terminal, wherein the control state adjustment request is used for requesting to switch a first adjustment control corresponding to the first target interface from a first control display state to a second control display state.

21. The method of claim 17, further comprising:
after a third prompt object is received from a host terminal, displaying the third prompt object, wherein the third prompt object is used for describing a change of interface display state of the first target interface.

22. An apparatus for displaying co-hosting, comprising:
a first display unit, configured to display a first co-hosting page, wherein the first co-hosting page comprises a plurality of candidate user interfaces;
a second display unit, configured to display a gift panel in response to a trigger operation for a first target interface among the plurality of candidate user interfaces; wherein the gift panel comprises at least one virtual gift and a first adjustment control; and
a first adjustment unit, configured to adjust, on the first co-hosting page, an interface display state of at least one to-be-adjusted user interface among the plurality of candidate user interfaces in response to a trigger operation for the first adjustment control in the gift panel, wherein the at least one to-be-adjusted user interface comprises the first target interface.

23. An apparatus for displaying co-hosting, comprising:
a third display unit, configured to display a second co-hosting page, wherein the second co-hosting page comprises a plurality of candidate user interfaces, and the plurality of candidate user interfaces comprise a first target interface corresponding to the guest terminal;
a second adjustment unit, configured to, if the first target interface is in a highlighted state, switching the first target interface from the highlighted state to a non-highlighted state in response to a fourth operation triggered for the second co-hosting page.

24. An electronic device, wherein the electronic device comprises a processor and a memory;
the memory is configured to store instructions or computer programs;
the processor is configured to execute the instructions or computer programs in the memory to cause the electronic device to implement the method according to any one of claims 1-21.

25. A computer readable medium having instructions or computer programs stored thereon, wherein the instructions or computer programs, when being executed on a device, cause the device to implement the method according to any one of claims 1-21.

26. A computer program product comprising a computer program carried on a non-transitory computer readable medium, wherein the computer program comprises program instructions for implementing the method according to any one of claims 1-21.
